# EUROPEAN PATENT APPLICATION

(11) **EP 1 852 324 A1**
(43) Date of publication of application: **07.11.2007**
(21) Application number: 06714378.4
(22) Date of filing: 23.02.2006
(51) Int. Cl.: B60T 8/00, B60T 8/17

(54) **BRAKE CONTROL DEVICE**

(30) Priority: 24.02.2005 JP 2005049717; 02.02.2006 JP 2006025549
(71) Applicant: HITACHI, LTD., Chiyoda-ku Tokyo 100-8280 (JP)
(72) Inventor: IWASAKI, Katsuya, chome, Atsugi-shi, Kanagawa, 2438510 (JP); KAJIYAMA, Keigo, chome, Atsugi-shi, Kanagawa, 2438510 (JP)
(74) Representative: Schaeberle, Steffen
(86) International application number: PCT/JP2006/303238
(87) International publication number: WO 2006/090764

(57) **Abstract**

A brake control device including: a braking-effort-sensing device for sensing braking efforts of vehicle wheels; an actuator for applying braking efforts to the vehicle wheels; and a control device for controlling the braking efforts of the vehicle wheels by controlling the actuator, wherein the control device: computes desired braking efforts of the vehicle wheels; and when the desired braking efforts of left and right wheels of the vehicle wheels are equal to each other, performs a braking effort correction of allowing the braking effort of one of the left and right wheels to approach the braking effort of the other of the left and right wheels. With this, it is possible to stabilize vehicle behavior during braking while minimizing effects caused on the control due to variations in production.

## Description

### Technical Field

The present invention relates to brake control devices for applying braking effort to vehicle wheels.

### Background Art

For example, a patent document 1 conventionally discloses a technique concerning a brake control device. The brake control device described in this publication includes for each wheel a hydraulic braking effort control means and a fluid pressure sensor, and implements a precise vehicle control by controlling a wheel cylinder pressure at each wheel independently of each other. Patent document 1: Japanese Patent Application Publication No. 2002-211374.

### Disclosure of the Invention

### Problem(s) to be Solved by the Invention

According to the conventional art described above, it is possible that manufacturing variations of electromagnetic valves, etc., cause variations in flow rate characteristic among wheels, and thereby cause variations among actual braking efforts of the wheels which are generated based on desired braking efforts that are equal between left and right wheels. This causes a problem of unstable vehicle behavior during braking.

The present invention has been made in attention to the problem described above. It is an object of the invention to provide a brake control device for stabilizing vehicle behavior during braking, while suppressing effects of manufacturing variations.

### Means for Solving the Problem(s)

According to the present invention, in order to accomplish the object described above, a brake control device comprises: a braking-effort-sensing means for sensing braking efforts of vehicle wheels; an actuator for applying braking efforts to the vehicle wheels; and a control means for controlling the braking efforts of the vehicle wheels by controlling the actuator, wherein the control means: computes desired braking efforts of the vehicle wheels; and when the desired braking efforts of left and right wheels are equal to each other, performs a braking effort correction of allowing the braking effort of one of the left and right wheels to approach the braking effort of the other of the left and right wheels.

It is thus possible to provide a brake control device for stabilizing vehicle behavior during braking, while suppressing effects of manufacturing variations.

### Brief Description of the Drawings

Fig. 1 is a system configuration diagram of a brake control device according to the present application.
Fig. 2 is a hydraulic circuit diagram of a first hydraulic unit.
Fig. 3 is a hydraulic circuit diagram of a second hydraulic unit.
Fig. 4 is a control block diagram of first and second sub ECUs. It is a flow chart showing a control process of judging whether or not to perform a braking effort correction.
Fig. 5 is a block diagram showing a relationship of command among a main ECU, and the first and second sub ECUs under a braking effort correction control (control of reducing the output of a motor of a higher-pressure unit) according to Embodiment 1.
Fig. 6 is a block diagram showing a relationship of command among the main ECU, and the first and second sub ECUs under the braking effort correction control (during pressure reduction).
Fig. 7 is a flow chart showing a control process of judging whether or not to perform a brake-by-wire control.
Fig. 8 is a flow chart showing a process of the brake-by-wire control (Fig. 7, Step S10).
Fig. 9 is a flow chart of judging whether or not to perform the braking effort correction control (Fig. 8, Step S20).
Fig. 10 is a flow chart showing a process of the braking effort correction control (Fig. 9, Step S30).
Fig. 11 is a flow chart showing a process of implementing the braking effort correction control during pressure increase by reducing the output of the higher-pressure motor (Fig. 10, Step S100).
Fig. 12 is a flow chart showing a process of implementing the braking effort correction control during pressure increase by reducing the flow rate of a lower-pressure outlet valve (Fig. 10, Step S200).
Fig. 13 is a time chart showing how the braking effort correction control proceeds with time in Embodiment 1.
Fig. 14 is a block diagram showing a relationship of command among a main ECU, and first and second sub ECUs under a braking effort correction control (control of increasing the output of a motor of a lower-pressure unit) according to Embodiment 2.
Fig. 15 is a flow chart for implementing the braking effort correction control during pressure increase of Step S100 of Fig. 10 by increasing the output of the lower-pressure motor.
Fig. 16 is a time chart showing how the braking effort correction control proceeds with time in Embodiment 2.
Fig. 17 is a block diagram showing a relationship of command among a main ECU, and first and second sub ECUs under a braking effort correction control (control of reducing the flow rate of an inlet valve for a higher-pressure wheel) according to Embodiment 3.
Fig. 18 is a flow chart showing a process of implementing the braking effort correction control during pressure increase by reducing the flow rate of the higher-pressure inlet valve (Fig. 10, Step S100).
Fig. 19 is a time chart showing how the braking effort correction control proceeds with time in Embodiment 3.
Fig. 20 is a hydraulic circuit diagram of a first hydraulic unit according to Embodiment 3-1.
Fig. 21 is a time chart showing how a braking effort correction control proceeds with time in Embodiment 3-1.
Fig. 22 is a diagram showing a concept of a braking effort correction control according to Embodiment 4 (before performing a control of shutting off the fluid pressure supply to a rear wheel of a lower-pressure system).
Fig. 23 is a diagram showing a concept of the braking effort correction control according to Embodiment 4 (after performing the control of shutting off the fluid pressure supply to the rear wheel of the lower-pressure system).
Fig. 24 is a block diagram showing a relationship of command among a main ECU, and first and second sub ECUs under a braking effort correction control (control of reducing the opening of an inlet valve of the rear wheel of the lower-pressure system).
Fig. 25 is a flow chart showing a process of implementing the braking effort correction control during pressure increase by reducing the opening of the inlet valve of the rear wheel of the lower-pressure system (Fig. 10, Step S100).
Fig. 26 is a time chart showing how the braking effort correction control proceeds with time in Embodiment 4.
Fig. 27 is a system configuration diagram of a brake control device according to Embodiment 5.
Fig. 28 is a hydraulic circuit diagram of first and second hydraulic units according to Embodiment 5.
Fig. 29 is a diagram showing an example in which inlet valves and outlet valves in the hydraulic circuit according to Embodiment 5 are linear valves.
Fig. 30 is a system configuration diagram according to Embodiment 6.
Fig. 31 is a hydraulic circuit diagram according to Embodiment 6.
Fig. 32 is a diagram showing another embodiment of the present application (where Embodiments 1 to 4 are modified by normally opening the inlet valves, and providing check valves for prevention of inverse flow).
Fig. 33 is a diagram showing another embodiment of the present application (where a main ECU is connected to an integrated controller of a vehicle).

### Best Mode(s) for Carrying Out the Invention

The following describes best modes for carrying out a brake control device according to the present invention, with reference to embodiments shown in the drawings.

### Embodiment 1

### [System Configuration]

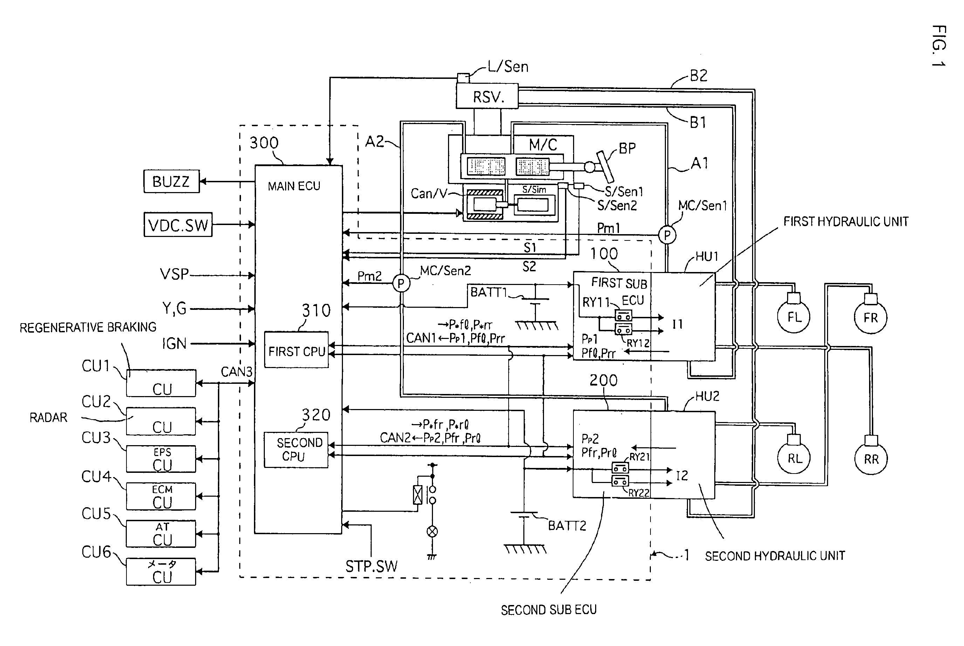

Embodiment 1 is described with reference to Figs. 1 to 13. Fig. 1 is a system configuration diagram of a brake control device according to Embodiment 1. The brake control device according to Embodiment 1 is a four-wheel hydraulic brake-by-wire system including first and second hydraulic units HU1 and HU2 for controlling fluid pressures independently of driver's operation of a brake pedal BP.

A control unit 1 (control mechanism, or control means) includes a main ECU 300 (main unit) for computing desired wheel cylinder pressures P*fl to P*rr for vehicle wheels FL to RR, and sub ECUs 100 and 200 (first and second sub units) for driving first and second hydraulic units HU1 and HU2.

First and second hydraulic units HU1 and HU2 are driven by first and second sub ECUs 100 and 200 in accordance with commands from main ECU 300. A stroke simulator S/Sim, which is connected to a master cylinder M/C, applies a feedback force to brake pedal BP.

First and second hydraulic units HU1 and HU2 are connected to master cylinder M/C through fluid passages A1 and A2, respectively, and connected to a reservoir RSV through fluid passages B1 and B2, respectively. First and second M/C pressure sensors MC/Sen1 and MC/Sen2 are provided in fluid passages A1 and A2, respectively.

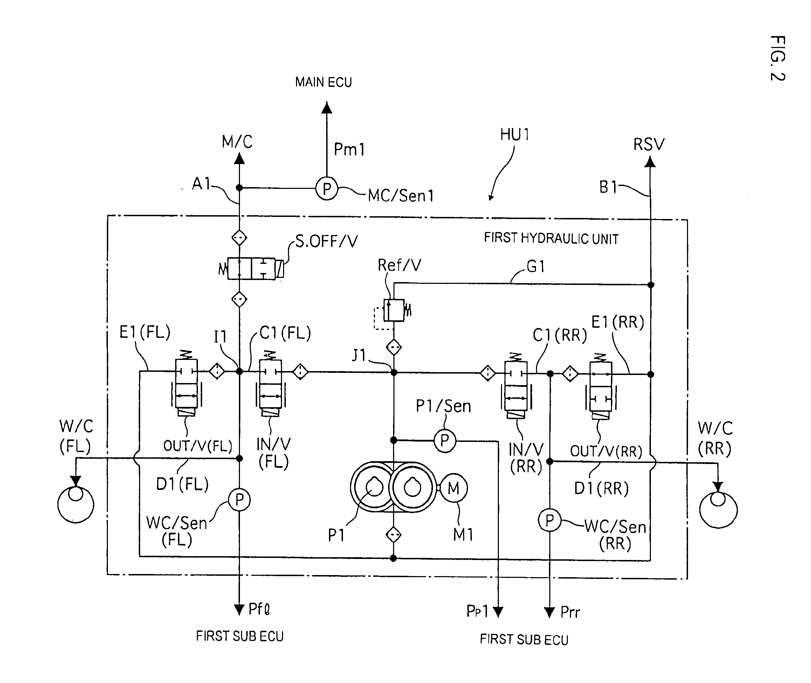

Each of first and second hydraulic units HU1 and HU2 is a hydraulic actuator for generating fluid pressures independently of each other, including a pump P1, P2, a motor M1, M2, and electromagnetic valves (see Fig. 2). First hydraulic unit HU1 performs a fluid pressure control for wheels FL and RR, while second hydraulic unit HU2 performs a fluid pressure control for wheels FR and RL.

Specifically, pumps P1 and P2, as two hydraulic sources, directly pressurize wheel cylinders W/C(FL~RR). Since wheel cylinders W/C are pressurized directly by pumps P1 and P2 with no accumulator, there is no possibility that a gas in such an accumulator leaks into a fluid passage under a failed condition. Pump P1 serves for pressure increase for wheels FL and RR, and pump P2 serves for pressure increase for wheels FR and RL, constituting so called an X-pipe arrangement.

First and second hydraulic units HU1 and HU2 are provided separately from each other. The separate provision allows one hydraulic unit to generate a braking effort, even when the other hydraulic unit is subject to a leak. However, first and second hydraulic units HU1 and HU2 are not so limited, but may be provided as a unit so as to collect electric circuit configurations at one place, shorten harnesses, etc., and thus simplify the layout.

A small number of hydraulic sources are desired for the compactness of the device. However, in the case of a single hydraulic source as in the conventional example, there is no backup when the hydraulic source is failed. On the other hand, in the case of four hydraulic sources for respective wheels, it is advantageous against failures, but the device is large-sized, and difficult to control. A brake-by-wire control requires a redundant system. Such a system may diverge with an increase in the number of hydraulic sources.

Currently, brake fluid passages of vehicles are generally in the form of X-pipe arrangement in which a pair of diagonally opposite wheels (FL-RR or FR-RL) are connected to each other through a fluid passage, and each system is pressurized by a separate hydraulic source (tandem-type master cylinder, etc.). Thus, even when one pair of diagonally opposite wheels are failed, the other pair of diagonally opposite wheels can generate a braking effort while preventing the braking effort from leaning to one of the left and right sides. Therefore, the number of hydraulic sources is assumed to be two.

Naturally, in the case of a single hydraulic source as in the conventional example, no X-pipe arrangement is possible. Also, in the case of three or four hydraulic sources, each pair of diagonally opposite wheels are not connected by a single hydraulic source, no X-pipe arrangement is possible.

Therefore, in embodiments of the present application, in order to improve anti-fail performance while employing widely-used X-pipe arrangement with no modification, a system comprising two hydraulic sources is constructed by providing hydraulic units HU1 and HU2 having pumps P1 and P2 as hydraulic sources, respectively.

When a vehicle is under braking, it is difficult to depend largely on the braking effort of rear wheels, because a larger load is applied to front wheels. A large braking effort of rear wheels may cause a spin. Accordingly, in general, braking effort is distributed relatively largely to front wheels, for example, 2 part to front wheels and 1 part to rear wheels.

### [Main ECU]

Main ECU 300 is a high-level CPU for computing desired wheel cylinder pressures P*fl to P*rr to be generated by first and second hydraulic units HU1 and HU2. Main ECU 300 is connected to first and second power supplies BATT1 and BATT2 so that main ECU 300 is capable of operating when one of BATT1 and BATT2 is normal. Main ECU 300 is started in response to an ignition signal IGN or in response to a start request from others CU1 to CU6 connected through CAN3 to main ECU 300.

Stroke signals S1 and S2 from first and second stroke sensors S/Sen1 and S/Sen2, and M/C pressures Pm1 and Pm2 from first and second M/C pressure sensors MC/Sen1 and MC/Sen2, are inputted into main ECU 300.

Also, a wheel speed VSP, a yaw rate Y and a longitudinal G are inputted into main ECU 300. Moreover, a value sensed by a fluid amount sensor L/Sen provided in reservoir RSV is inputted into main ECU 300. Main ECU 300 judges whether or not it is possible to perform a brake-by-wire control based on pump drive. Operation of brake pedal BP is detected based on a signal from a stop lamp switch STP.SW, not based on stroke signals S1 and S2 and M/C pressures Pm1 and Pm2.

First and second CPUs 310 and 320 are provided within main ECU 300 for computing. First and second CPUs 310 and 320 are respectively connected to first and second sub ECUs 100 and 200 through CAN communication lines CAN1 and CAN2. Pump discharge pressures Pp1 and Pp2, and actual wheel cylinder pressures Pfl to Prr, are inputted through first and second sub ECUs 100 and 200 into first and second CPUs 310 and 320.

CAN communication lines CAN1 and CAN2 are connected to each other for bidirectional communication, and are each in the form of a redundant system for backup. The connection between CAN communication lines CAN1 and CAN2 allows first and second sub ECUs 100 and 200 to receive all of desired wheel cylinder pressures P*fl to P*rr of wheels FL to RR.

On the basis of the inputted stroke signals S1 and S2, M/C pressures Pm1 and Pm2 and actual wheel cylinder pressures Pfl to Prr, first and second CPUs 310 and 320 compute desired wheel cylinder pressures P*fl to P*rr, and output them to sub ECUs 100 and 200 through CAN communication lines CAN1 and CAN2.

Alternatively, desired wheel cylinder pressures P*fl to P*rr for first and second hydraulic units HU1 and HU2 may be computed only by first CPU 310, while second CPU 320 may serve as a backup for first CPU 310.

Moreover, main ECU 300 starts sub ECUs 100 and 200 through CAN communication lines CAN1 and CAN2. It generates signals for starting separately first and second sub ECUs 100 and 200. It is not so limited, but may generate a single signal for starting sub ECUs 100 and 200 simultaneously. They may be started by an ignition switch IGN.

During vehicle behavior controls such as ABS (control of increase and reduction in braking effort in order to prevent vehicle wheels from locking up), VDC (control of increase and reduction in braking effort in order to prevent side slips under disturbance of vehicle behavior), and TCS (control of preventing driving wheels from slipping), desired wheel cylinder pressures P*fl to P*rr are controlled taking in wheel speed VSP, yaw rate Y and longitudinal G. During the VDC control, a buzzer BUZZ warns a driver. It is possible to switch the control on or off by a VDC switch VDC.SW as the driver desires.

Main ECU 300 is connected to other control units CU1 to CU6 through CAN communication line CAN3 so that main ECU 300 performs a cooperative control. Regenerative braking control unit CU1 regenerates braking effort into electric energy. Radar control unit CU2 controls vehicle-to-vehicle distance. EPS control unit CU3 is a control unit of an electric power steering system.

ECM control unit CU4 is a control unit of an engine. AT control unit CU5 is a control unit of an automatic transmission. Meter control unit CU6 controls meters. Wheel speed VSP, which is inputted into main ECU 300, is outputted through CAN communication line CAN3 to ECM control unit CU4, AT control unit CU5 and meter control unit CU6.

ECUs 100, 200 and 300 receive electric power from first and second power supplies BATT1 and BATT2. First power supply BATT1 is connected to main ECU 300 and first sub ECU 100. Second power supply BATT2 is connected to main ECU 300 and second sub ECU 200.

### [Sub ECUs]

First and second sub ECUs 100 and 200 are formed integrally with first and second hydraulic units HU1 and HU2, respectively. Alternatively, first and second sub ECUs 100 and 200 may be formed separately from first and second hydraulic units HU1 and HU2, respectively, in order to conform to the layout of the vehicle.

First and second sub ECUs 100 and 200 receive desired wheel cylinder pressures P*fl to P*rr outputted from main ECU 300, and respectively pump discharge pressures Pp1 and Pp2 of first and second pumps P1 and P2 and actual wheel cylinder pressures Pfl and Prr, and Pfr and Prl from first and second hydraulic units HU1 and HU2.

As described above, first and second ECUs 100 and 200 are connected to main ECU 300 through CAN communication lines CAN1 and CAN2 for bidirectional communication, respectively. First and second sub units 100 and 200 send and receive pump discharge pressures Pp1 and Pp2 and actual wheel cylinder pressures P(fl~rr) to and from each other.

Thus, ECUs 100, 200 and 300 share desired wheel cylinder pressures P*(fl~rr), actual wheel cylinder pressures P(fl~rr), and first and second pump discharge pressures Pp1 and Pp2.

First and second sub ECUs 100 and 200 perform a fluid pressure control by operating pumps P1 and P2, motors M1 and M2, and the electromagnetic valves in first and second hydraulic units HU1 and HU2, based on the inputted pump discharge pressures Pp1 and Pp2 and actual wheel cylinder pressures Ffl to Prr, in order to attain desired wheel cylinder pressures P*fl to P*rr. First and second sub ECUs 100 and 200 may be formed separately from first and second hydraulic units HU1 and HU2, respectively.

Once desired wheel cylinder pressures P*fl to P*rr are inputted, first and second sub ECUs 100 and 200 serve as a servo control system of performing a control to converge to the last input value until a new desired value is inputted.

First and second sub ECUs 100 and 200 convert the electric power from power supplies BATT1 and BATT2 into valve drive currents I1 and I2 and motor drive currents Im1 and Im2 for first and second hydraulic units HU1 and HU2, and outputs them to first and second hydraulic units HU1 and HU2 through relays RY11 and RY12, and relays RY21 and RY22, respectively.

### [Separation between Desired Value Computation and Drive Control in Hydraulic Unit]

Main ECU 300 according to the present application performs desired value computation but performs no drive control. If main ECU 300 alternatively performs both of desired value computation and drive control, it cooperates with other control units through CAN communication to output a drive command to first and second hydraulic units HU1 and HU2.

Increase in speed of communication lines connected to other controllers in the vehicle, results in a high cost, and may cause noises to affect adversely the anti-fail performance.

In the embodiments of the present application, during brake control, main ECU 300 serves only to compute desired wheel cylinder pressures P*fl to P*rr for first and second hydraulic units HU1 and HU2, while the drive control of first and second hydraulic units HU1 and HU2 as hydraulic actuators are performed by first and second sub ECUs 100 and 200 having the servo control system.

Thus, when one of sub ECUs 100 and 200 is failed, at least the other sub ECU can continue a brake control.

Accordingly, even when there are added various units such as a regeneration cooperative brake system, a vehicle integrated control, and an ITS, which are in general necessary for hybrid vehicles and fuel cell vehicles, the brake control system is controlled independently of other controls systems so as to ensure the responsiveness of the brake control in conformance with these units.

Especially in the case of brake-by-wire systems as in the present application, it requires an elaborate control in accordance with the amount of operation of a brake pedal during normal braking which is frequently used. The separation between desired value computation and drive control in a hydraulic unit according to the present application is much advantageous.

### [Master Cylinder and Stroke Simulator]

Stroke simulator S/Sim is mounted in master cylinder M/C for generating a feedback force to brake pedal BP. Master cylinder M/C includes a directional control valve Can/V for selectively connecting or disconnecting between master cylinder M/C and stroke simulator S/Sim.

Directional control valve Can/V is of a type that is closed while de-energized, and is opened or closed by main ECU 300. It allows to shift quickly into manual braking when controlled or when sub ECUs 100 and 200 are failed. Master cylinder M/C includes first and second stroke sensors S/Sen1 and S/Sen2. Stroke signals S1 and S2 concerning brake pedal BP are outputted to main ECU 300.

### [Hydraulic Unit]

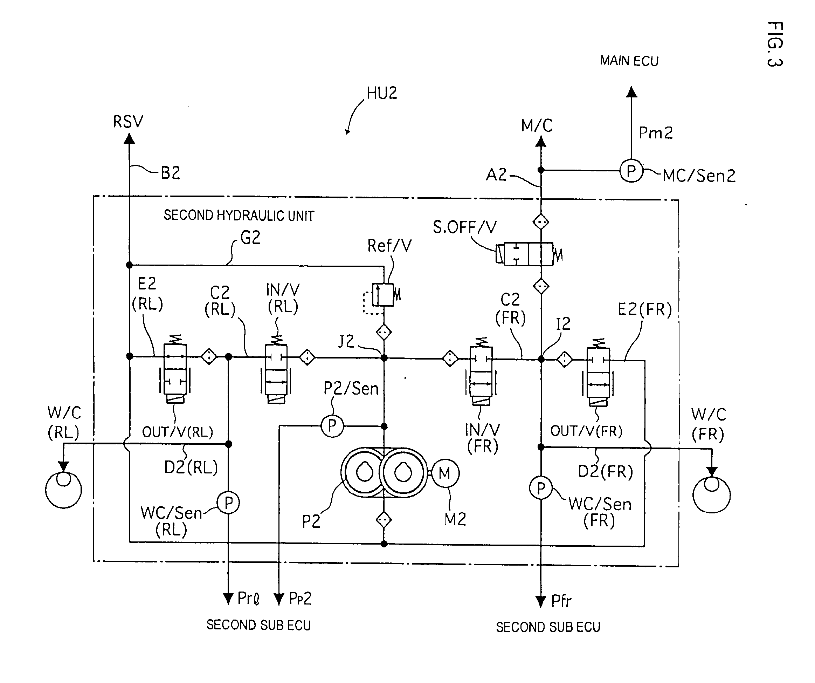

Figs. 2 and 3 are hydraulic circuit diagrams of first and second hydraulic units HU1 and HU2. First hydraulic unit HU1 includes a shut-off valve S.OFF/V, electromagnetic valves including FL-wheel and RR-wheel inlet valves IN/V(FL, RR) and FL-wheel and RR-wheel outlet valves OUT/V(FL, RR), pump P1, and motor M1.

Pump P1 is connected on the discharge side through fluid passages C1(FL, RR) to FL-wheel and RR-wheel wheel cylinders W/C(FL, RR), respectively, and connected on the suction side through fluid passage B1 to reservoir RSV. Fluid passages C1(FL, RR) are connected to fluid passage B1 through fluid passages E1(FL, RR), respectively.

Moreover, a node 11 between fluid passage C1(FL) and fluid passage E1(FL) is connected to master cylinder M/C through fluid passage A1. Also, a node J1 between fluid passages C1(FL, RR) is connected to fluid passage B1 through fluid passage G1.

Shut-off valve S.OFF/V is a normally open electromagnetic valve, disposed in fluid passage A1 for selectively connecting or disconnecting between master cylinder M/C and node I1.

FL-wheel and RR-wheel inlet valves IN/V(FL, RR) are normally closed linear valves disposed in fluid passages C1(FL, RR), respectively, for linearly controlling and supplying to FL-wheel and RR-wheel wheel cylinders W/C(FL, RR) the discharge pressure of pump P1. Since they are normally closed, they prevent master cylinder pressure Pm from inversely flowing into pump P1 when they are failed.

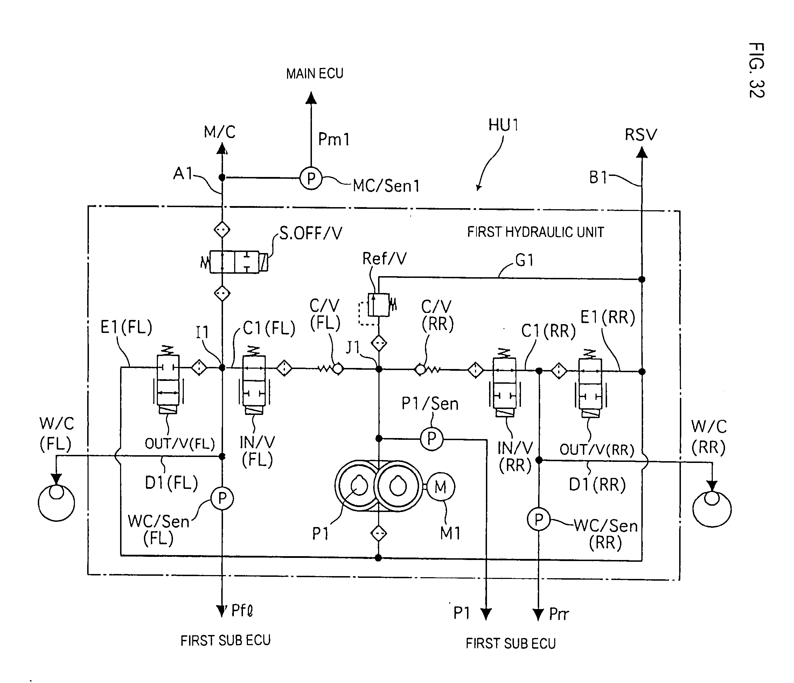

Alternatively, inlet valves IN/V(FL, RR) may be normally open, and check valves C/V(FR, RR) may be provided in fluid passages C1(FL, RR) for preventing inverse flow toward pump P1 (See Fig. 32). Being normally opened, inlet valves IN/V(FL, RR) consume a less electric power.

FL-wheel and RR-wheel outlet valves OUT/V(FL, RR) are provided in fluid passages E1(FL, RR), respectively. FL-wheel outlet valve OUT/V(FL) is a normally closed linear valve, while RR-wheel outlet valve OUT/V(RR) is a normally opened linear valve. A relief valve Ref/V is provided in fluid passage G1.

First M/C pressure sensor MC/Sen1 is provided in fluid passage A1 between first hydraulic unit HU1 and master cylinder M/C, for outputting first M/C pressure Pm1 to main ECU 300. In first hydraulic unit HU1, FL-wheel and RR-wheel wheel cylinder pressure sensors WC/Sen(FL, RR) are provided in fluid passages C1(FL, RR), respectively, and a first pump discharge pressure P1/Sen is provided on the discharge side of first pump P1, for outputting the sensed values Pfl, Prr and Pp1 to first sub ECU 100.

### [Normal Braking under Brake-by-Wire Control]

### (During Pressure Increase)

During pressure increase in normal braking under brake-by-wire control, shut-off valve S.OFF/V is closed, inlet valves IN/V(FL, RR) are opened, outlet valves OUT/V(FL, RR) are closed, and first motor M1 is operated. First motor M1 drives first pump P1 so as to supply a discharge pressure to fluid passages C1(FL, RR), and inlet valves IN/V(FL, RR) control the fluid pressure and supply it to FL-wheel and RR-wheel wheel cylinders W/C(FL, RR), for attainment of a pressure increase.

### (During Pressure Reduction)

During pressure reduction in normal braking, inlet valves IN/V(FL, RR) are closed, and outlet valves OUT/V(FL, RR) are opened, for draining the working fluid from FL-wheel and RR-wheel wheel cylinders W/C(FL, RR) to reservoir RSV, for attainment of a pressure reduction.

### (During Pressure Maintenance)

During pressure maintenance in normal braking, all of inlet valves IN/V(FL, RR) and outlet valves OUT/V(FL, RR) are closed to maintain the wheel cylinder pressures.

### [Manual Braking]

During manual braking, for example, when the system is failed, shut-off valve S.OFF/V is opened, and inlet valves IN/V(FL, RR) are closed. Thus, master cylinder pressure Pm is not supplied to RR-wheel wheel cylinder W/C(RR).

On the other hand, since FL-wheel outlet valve OUT/V(FL) is normally closed, FL-wheel outlet valve OUT/V(FL) is closed during manual braking so that master cylinder pressure Pm is applied to FL-wheel wheel cylinder W/C(FL). Thus, master cylinder pressure Pm, which is increased by a driver's pedal depressing force, is applied to FL-wheel wheel cylinder W/C(FL), allowing manual braking.

Alternatively, manual braking may be applied to wheel RR. However, it is not realistic because the load to the depression of the driver is increased excessively if the wheel cylinder pressure of wheel RR is increased based on the pedal depressing force as well as wheel FL. Accordingly, in the embodiments of the present application, first hydraulic unit HU1 applies manual braking only to wheel FL which is capable of generating a larger braking effort.

Thus, the RR-wheel outlet valve is normally opened so that under system failures, the remaining pressure of RR-wheel wheel cylinder W/C(RR) is quickly drained to prevent wheel RR from locking up.

Second hydraulic unit HU2 has the same circuit configuration and performs the same control. As in the case of first hydraulic unit HU1, FR-wheel outlet valve OUT/V(FR) is normally closed, and RL-wheel outlet valve OUT/V(RL) is normally opened, so that manual braking is applied only to wheel FR.

### [Control Block Diagram of Sub ECUs]

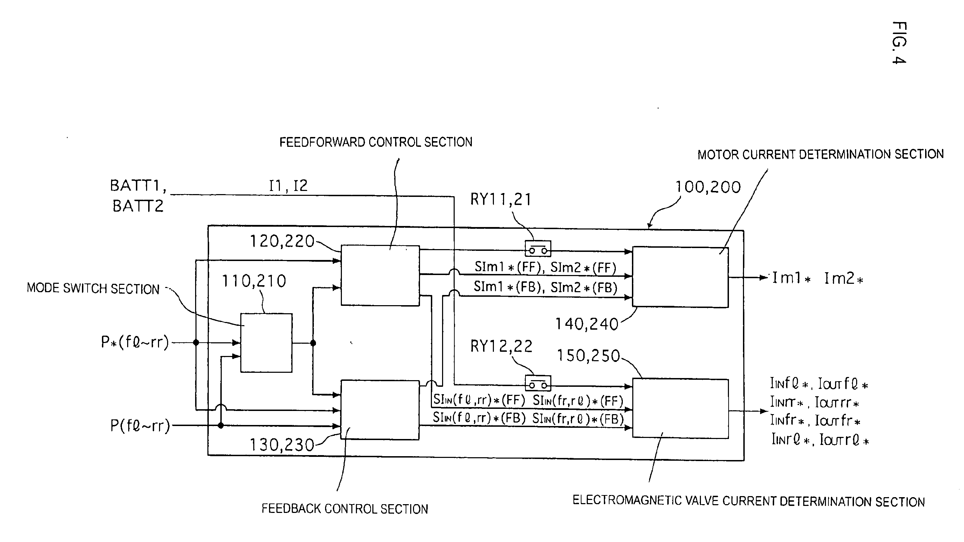

Fig. 4 is a control block diagram of first and second sub ECUs 100 and 200. The following describes only first sub ECU 100, because first and second sub ECUs 100 and 200 have an identical configuration.

First sub ECU 100 includes a mode switch section 110, a feedforward (FF) control section 120, a feedback (FB) control section 130, a motor current determination section 140, and an electromagnetic valve current determination section 150.

### (Mode Switch Section)

Mode switch section 110 judges which one of pressure reduction, pressure increase, and pressure maintenance is to be performed, based on FL-wheel and RR-wheel desired wheel cylinder pressures P*fl to P*rr, and outputs the result of the judgment to FF control section 120 and FB control section 130. Mode switch section 110 also outputs drive signals to first motor M1, inlet valves IN/V(FL, RR) and outlet valves OUT/V(FL, RR).

### (Feedforward Control Section)

FF control section 120 outputs a signal SIm1*(FF) of a feedforward component Im1*(FF) of a first desired motor drive current Im1*, based on FL-wheel and RR-wheel desired wheel cylinder pressures P*fl and P*rr.

FF control section 120 outputs feedforward component signals SIINfl*(FF) and SIINrr*(FF) of FL and RR desired inlet valve currents IINfl* and IINrr*, based on desired values P*fl and P*rr. Similarly, with regard to FL-wheel and RR-wheel outlet valves OUT/V(FL, RR), FF control section 120 outputs desired current feedforward component signals SIOUTfl(FF) and SIOUTrr(FF).

### (Feedback Control Section)

FB control section 130 outputs a feedback component signal SIm1*(FB) of first desired motor drive current Im1*, based on FL-wheel and RR-wheel desired wheel cylinder pressures P*fl and P*rr, and actual values Pfl and Prr.

FB control section 130 outputs feedback component signals SIINfl*(FB) and SIINrr*(FB) of FL and RR inlet valve desired currents IINfl* and IINrr*, based on FL-wheel and RR-wheel desired wheel cylinder pressures P*fl and P*rr, and actual values Pfl and Prr.

### (Motor Current Determination Section)

Motor current determination section 140 multiplies the sum of first desired motor drive current feedforward and feedback component signals SIm1*(FF) and SIm1*(FB) by first power supply current 11, and outputs the product as a first desired motor drive current Im1* to motor M1.

### (Electromagnetic Valve Current Determination Section)

Electromagnetic valve current determination section 150 multiplies the sum of desired current FF and FB component signals SIINfl*(FF) and SIINfl*(FB) by first power supply current I1, and outputs an FL-wheel desired inlet valve current IINfl*. With regard to wheel RR, RR-wheel desired inlet valve current IINrr* is outputted similarly.

With regard to outlet valves OUT/V(FL, RR), electromagnetic valve current determination section 150 multiplies the sum of desired current FF and FB component signals SIOUTfl*(FL, RR) and SIOUTrr*(FL, RR) by first power supply current I1, and outputs FL-wheel and RR-wheel desired outlet valve current IOUTfl* and IOUTrr*, respectively.

Second sub ECU 200 performs a similar control based on desired values P*fr and P*rl, and actual fluid pressures Pfr and Prl, of FR-wheel and RL-wheel wheel cylinder pressures, and outputs second desired motor drive current Im2*, and desired currents IINfr*, IINrl*, IOUTfr*, and IOUTrl* of inlet valves IN/V(FR, RL) and outlet valves OUT/V(FR, RL) of wheels FR and RL.

### [Control of Correcting Difference in Braking Effort between Left and Right Wheels]

Vehicles capable of performing four-wheel independent brake control include a hydraulic braking effort control means and a fluid pressure sensor for each wheel for controlling wheel cylinder pressures independently of each other for precise vehicle control. However, in this control, there is no consideration of manufacturing variations of electromagnetic valves for hydraulic control among wheels. Accordingly, when a single command value is outputted for left and right wheels, left and right actual wheel cylinder pressures may be different from each other due to differences in the flow rate characteristic between the electromagnetic valves.

Since a valve has no further stroke especially when the valve is fully opened, it is impossible to cancel the difference in the flow rate under condition that the valve is fully opened, by correction at shipping. When the working fluid has a large coefficient of viscosity, for example, at low temperatures, the difference in fluid pressure between the front wheels due to the difference in flow rate characteristic is significant.

Accordingly, in Embodiment 1, when a difference in fluid pressure occurs between actual wheel cylinder pressures Pfl and Pfr at left and right front wheels FL and FR during pressure increase although desired wheel cylinder pressures P*fl and P*rr are equal to a single value P*a, the braking effort correction control is implemented by reducing a working fluid supplied to a higher-pressure wheel cylinder so as to reduce the actual higher-pressure wheel cylinder pressure. The braking effort correction control is always performed at least when inlet valves IN/V(FL~RR), and outlet valves OUT/V(FL~RR) are fully opened.

For example, when FL-wheel actual wheel cylinder pressure Pfl is higher than FR-wheel actual wheel cylinder pressure Pfr based on single desired wheel cylinder pressure P*a, FL-wheel desired wheel cylinder pressure P*fl is reduced below FR-wheel desired wheel cylinder pressure P*fr so as to reduce the working fluid supplied to the higher-pressure wheel cylinder. Thus, FL-wheel actual wheel cylinder pressure Pfl is reduced to correct the difference in braking effort between the left and right front wheels.

When a difference in fluid pressure occurs between actual wheel cylinder pressures Pfl and Pfr based on the single desired wheel cylinder pressure during pressure reduction, the braking effort correction control is implemented by increasing the desired wheel cylinder pressure of the lower-pressure side to reduce the working fluid drained from the lower-pressure wheel cylinder, and thereby to reduce the decrease in the actual lower-pressure wheel cylinder pressure.

For example, when FL-wheel actual wheel cylinder pressure Pfl is lower than FR-wheel actual wheel cylinder pressure Pfr based on the single desired wheel cylinder pressure, FL-wheel desired wheel cylinder pressure P*fl is increased above FR-wheel desired wheel cylinder pressure P*fr so as to reduce the working fluid drained from the lower-pressure wheel cylinder. Thus, in contrast to the case of pressure increase, the decrease in FL-wheel actual wheel cylinder pressure Pfl is reduced by reducing the working fluid drained form the lower-pressure wheel cylinder to correct the difference in braking effort between the left and right front wheels.

Both in the case of pressure increase and in the case of pressure reduction, the braking effort correction control is suspended when the absolute value of the difference in actual fluid pressure |ΔPf|=|Pfl-Pfr| becomes smaller than or equal to a predetermined threshold value Pth (Pth >0). When a difference in actual fluid pressure occurs between actual wheel cylinder pressures Prl and Prr of left and right rear wheels RL and RR, the braking effort correction control is performed as in the case of the front wheels.

### (Braking Effort Correction Control During Pressure Increase)

In Embodiment 1, first and second hydraulic units HU1 and HU2 respectively include pumps P1 and P2 as hydraulic sources, and motors M1 and M2 as power sources. First hydraulic unit HU1 is connected to wheels FL and RR, and second hydraulic unit HU2 is connected to wheels FR and RL, thus constituting an X-pipe arrangement.

For example, when the actual fluid pressures are expressed by Pfl>Pfr during pressure increase, FL-wheel desired wheel cylinder pressure P*fl can be reduced by reducing the output of first motor M1 which is connected to wheel FL (by reducing the output of the higher-pressure motor). In Embodiment 1, the braking effort correction between left and right wheels is implemented by reducing the output of the higher-pressure motor during pressure increase.

Alternatively, there are other methods such as a method of increasing the output of second motor M2 which is connected to wheel FR (method of increasing the output of the lower-pressure motor, Embodiment 2), and a method of reducing the opening of inlet valve IN/V(FL) which is connected to wheel FL (method of reducing the opening of the higher-pressure inlet valve, Embodiment 3), as described below.

### (Braking Effort Correction Control During Pressure Reduction)

In order to reduce the decrease in the actual wheel cylinder pressure of the lower-pressure side during pressure reduction, the braking effort correction is implemented by increasing the lower desired wheel cylinder pressure to reduce the flow rate of the lower-pressure outlet valve OUT/V, to reduce the working fluid drained from the lower-pressure wheel cylinder.

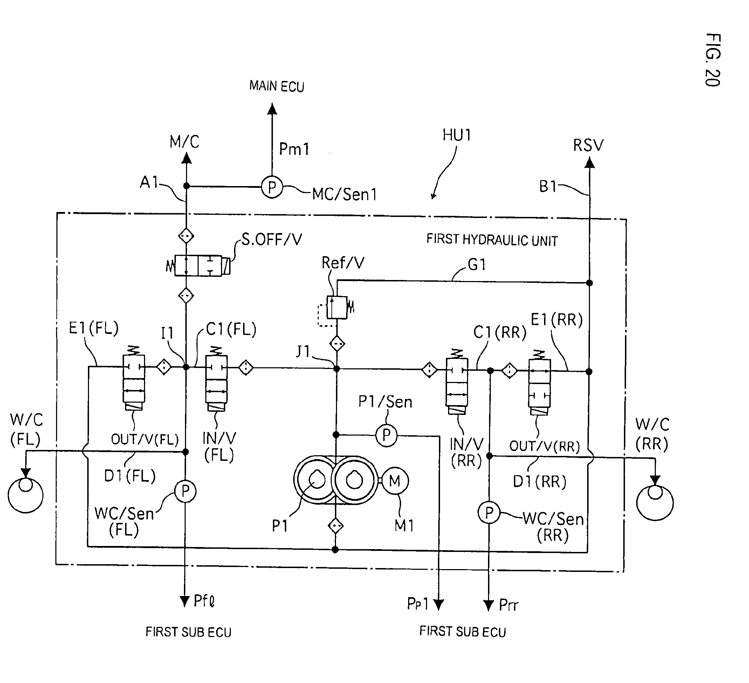

In Embodiment 1, each outlet valve OUT/V is a linear valve. The flow rate is reduced by reducing the opening of outlet valve OUT/V. Outlet valve OUT/V may be an ON/OFF valve, and closed temporarily (See Fig. 20). Since the braking effort correction during pressure reduction is implemented only by reducing the flow rate of outlet valve OUT/V, the braking effort correction during pressure reduction by outlet valve OUT/V is performed in all the embodiments regardless of the number of hydraulic units and the type of pipe arrangement.

### [Relationship of Command between ECUs]

### (Control of Reducing Motor Output of Higher-Pressure Unit during Pressure Increase)

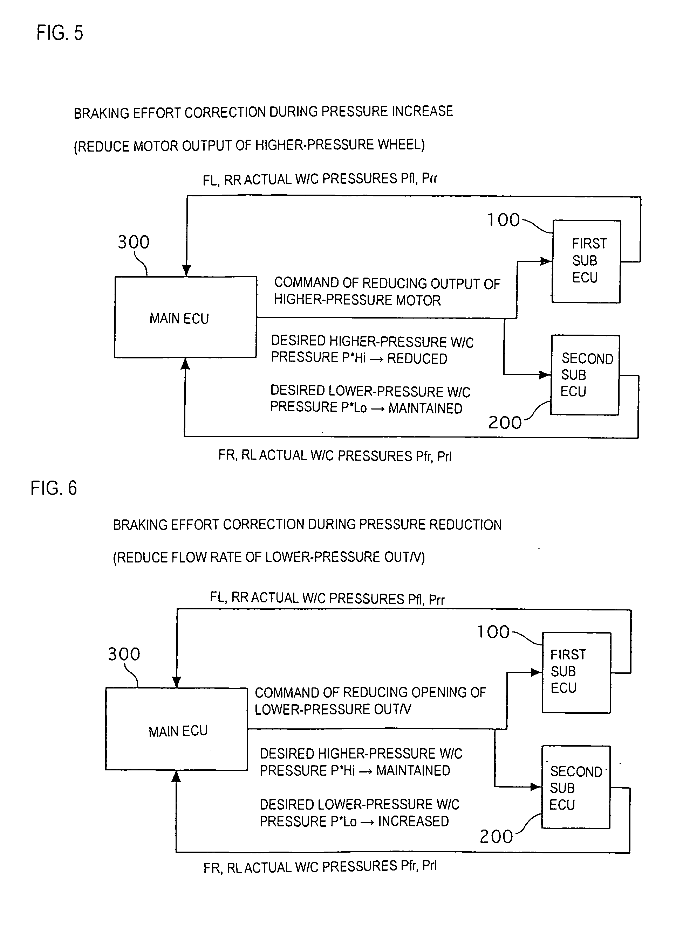

Fig. 5 is a block diagram showing a relationship of command among main ECU 300, and first and second sub ECUs 100 and 200 under the braking effort correction control (control of reducing the motor output of the higher-pressure unit).

When desired wheel cylinder pressures P*fl and P*fr of wheels FL and FR are equal to each other, and a difference in fluid pressure is present between actual wheel cylinder pressures Pfl and Pfr of left and right front wheels FL and FR during pressure increase, main ECU 300 outputs a command of output reduction to the motor of the hydraulic unit generating a higher pressure. Thus, the desired fluid pressure of the higher-pressure wheel cylinder P*Hi is reduced while the desired fluid pressure of the lower-pressure wheel cylinder P*Lo is maintained.

As a result, in wheels FL and FR, the higher-pressure wheel cylinder pressure is reduced and the lower-pressure wheel cylinder pressure is maintained so that the difference in fluid pressure between FL-wheel and FR-wheel actual wheel cylinder pressures Pfl and Pfr decreases. Also, with regard to wheels RL and RR, the difference in fluid pressure is reduced similarly.

### (Control of Reducing Flow Rate of Lower-Pressure Outlet Valve during Pressure Reduction)

Fig. 6 is a block diagram showing a relationship of command among main ECU 300, and first and second sub ECUs 100 and 200 under the braking effort correction control (during pressure reduction).

When desired wheel cylinder pressures P*fl and P*fr of wheels FL and FR are equal to each other, and a difference in fluid pressure is present between actual wheel cylinder pressures Pfl and Pfr of left and right front wheels FL and FR during pressure increase, main ECU 300 outputs a command of reducing the opening of outlet valve OUT/V that is connected to the lower-pressure wheel cylinder, to reduce the flow rate. Thus, the desired fluid pressure of the lower-pressure wheel cylinder P*Lo is increased while the desired fluid pressure of the higher-pressure wheel cylinder P*Hi is maintained.

As a result, in wheels FL and FR, the working fluid drained from the lower-pressure wheel cylinder is reduced and the higher-pressure wheel cylinder pressure is maintained so that the difference in actual fluid pressure between wheels FL and FR decreases. Also, with regard to wheels RL and RR, the difference in fluid pressure is reduced similarly.

### [Process of Judging Whether to Perform Brake-by-Wire Control]

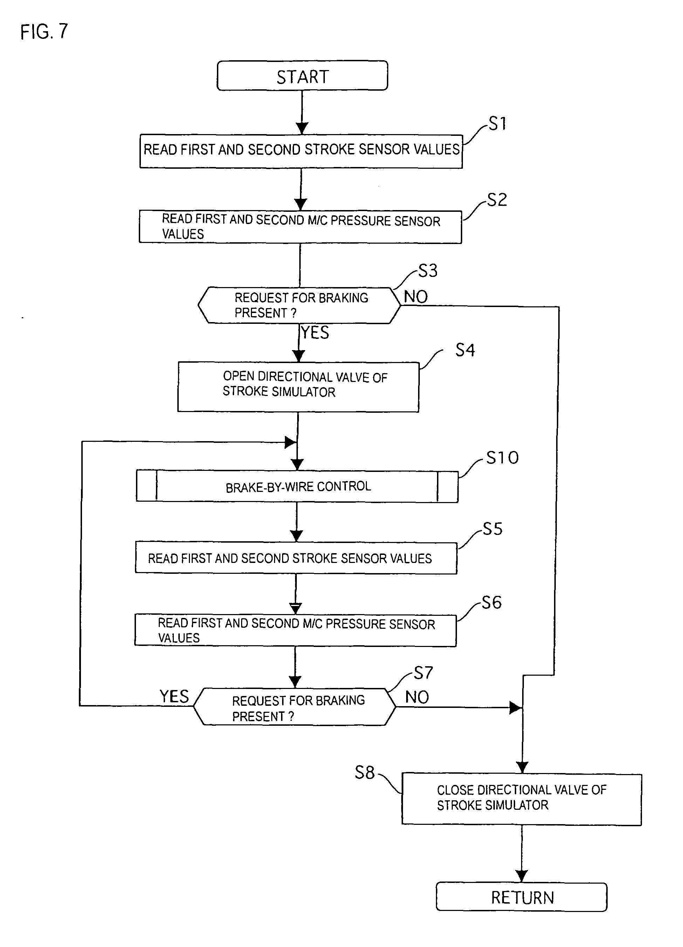

Fig. 7 is a flow chart showing a control process of judging whether or not to perform a brake-by-wire control. A brake-by-wire control of pressurizing wheel cylinders W/C by pumps P1 and P2 while closing the directional control valve Can/V of stroke simulator S/Sim, or a manual braking of providing a braking effort based on the master cylinder pressure while opening the directional control valve Can/V, is selectively performed. The following describes steps.

At Step S1, first and second stroke signals S1 and S2 are read, and then the process proceeds to Step S12.

At Step S2, first and second master cylinder pressures Pm1 and Pm2 are read, and then the process proceeds to Step S3.

At Step S3, on the basis of the read stroke signals S1 and S2 and Pm1 and Pm2, it is judged whether or not a request for braking by driver is present. When the answer is YES, then the process proceeds to Step S4. When the answer is NO, then the process proceeds to Step S8.

At Step S4, directional control valve Can/V is opened, and then the process proceeds to Step S10.

At Step S10, the brake-by-wire control is performed, and then the process proceeds to Step S5.

At Step S5, first and second stroke signals S1 and S2 are read, and then the process proceeds to Step S6.

At Step S6, first and second master cylinder pressures Pm1 and Pm2 are read, and then the process proceeds to Step S7.

At Step S7, on the basis of the read stroke signals S1 and S2 and Pm1 and Pm2, it is judged whether or not a request for brake by driver is present. When the answer is YES, then the process proceeds to Step S1. When the answer is NO, then the process proceeds to Step S8.

At Step S8, directional control valve Can/V is closed, and then the process proceeds to Step S9.

### [Process of Brake-by-Wire Control]

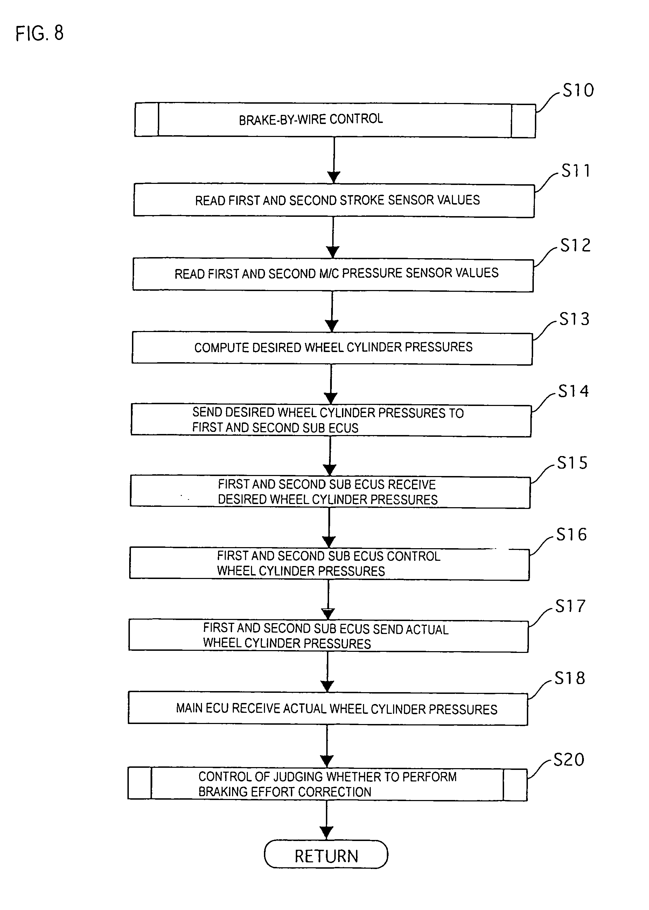

Fig. 8 is a flow chart showing a control process of the brake-by-wire control (Fig. 7, Step S10) performed by main ECU 300 and first and second sub ECUs 100 and 200. The following describes steps.

At Step S11, first and second stroke signals S1 and S2 are read, and then the process proceeds to Step S12.

At Step S12, first and second master cylinder pressures Pm1 and Pm2 are read, and then the process proceeds to Step S13.

At Step S13, first and second CPUs 310 and 320 of main ECU 300 compute desired wheel cylinder pressures P*fl to P*rr of first and second hydraulic units HU1 and HU2, and then the process proceeds to Step S14.

At Step S14, main ECU 300 sends desired wheel cylinder pressures P*fl to P*rr to first and second sub ECUs 100 and 200, and then the process proceeds to Step S15.

At Step S15, first and second sub ECUs 100 and 200 receive desired wheel cylinder pressures P*fl to P*rr, and then the process proceeds to Step S16.

At Step S16, first and second sub ECUs 100 and 200 operate first and second hydraulic units HU1 and HU2 to control actual wheel cylinder pressures Pfl to Prr, and then the process proceeds to Step S17.

At Step S17, first and second sub ECUs 100 and 200 send actual wheel cylinder pressures Pfl to Prr to main ECU 300, and then the process proceeds to Step S18.

At Step S18, main ECU 300 receives actual wheel cylinder pressures Pfl to Prr, and then the process proceeds to Step S20.

At Step S20, it is judged whether or not to perform the braking effort correction, and then the control is terminated.

### [Judgment Whether to Perform Braking Effort Correction]

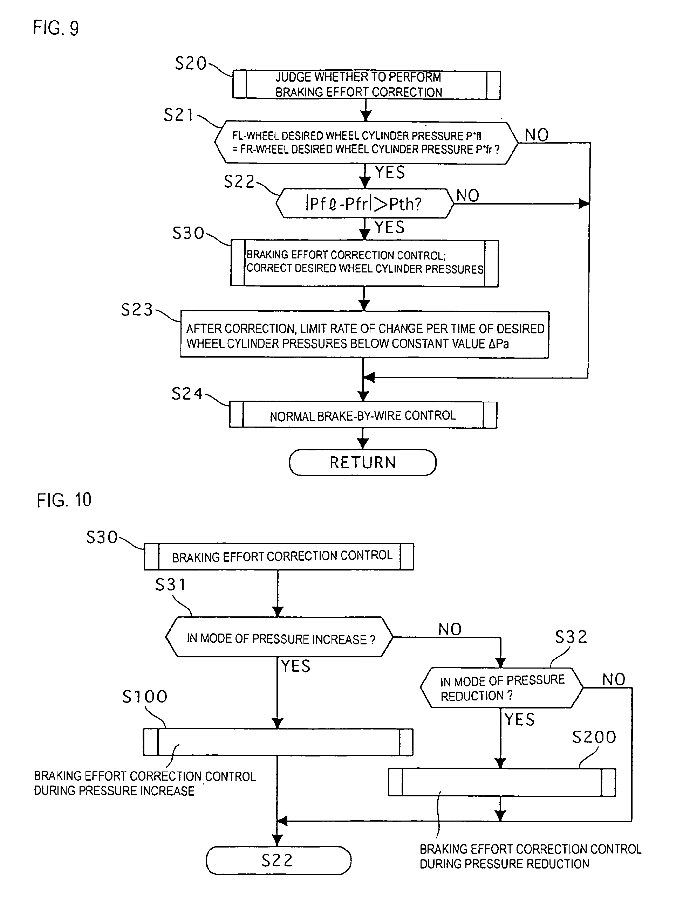

Fig. 9 is a flow chart of judging whether or not to perform the braking effort correction control (Fig. 8, Step S20).

At Step S21, it is judged whether or not desired wheel cylinder pressures P*fl and P*fr of wheels FL and FR are equal to each other. When the answer is YES, then the process proceeds to Step S22. When the answer is NO, then the process proceeds to Step S24.

At Step S22, it is judged whether or not the absolute value of the difference in fluid pressure between the left and right actual wheel cylinder pressures |Pfl-Pfr|>threshold value Pth. When the answer is YES, then the process proceeds to Step S30. When the answer is NO, then the process proceeds to Step S24.

At Step S30, the desired wheel cylinder pressures are corrected by the braking effort correction control, and then the process proceeds to Step S23.

At Step S23, the rate of change per time of the corrected desired wheel cylinder pressures are restricted to be smaller than or equal to a constant value ΔPa so as to cause no rapid change in the desired wheel cylinder pressures, and then the process proceeds to Step S24.

At Step S24, the normal brake-by-wire control in which wheel cylinders W/C are pressurized by pumps P1 and P2 is performed, and then the control is terminated.

### [Braking Effort Correction Control]

Fig. 10 is a flow chart showing a control process of the braking effort correction control (Fig. 9, Step S30).

At Step S31, it is judged whether or not it is in a mode of pressure increase. When the answer is YES, then the process proceeds to Step S100. When the answer is NO, then the process proceeds to Step S32.

At Step S100, the braking effort correction control during pressure increase is performed, and then the process proceeds to Step S22 of Fig. 9.

At Step S32, it is judged whether or not it is in a mode of pressure reduction on the basis of desired wheel cylinder pressures P*. When the answer is YES, then the process proceeds to Step S200. When the answer is NO, then the process proceeds to Step S22 of Fig. 9.

At Step S200, the braking effort correction control during pressure reduction is performed, and then the process proceeds to Step S22 of Fig. 9.

### [Control Process of Braking Effort Correction Control during Pressure Increase (Reducing Output of Higher-Pressure Motor)]

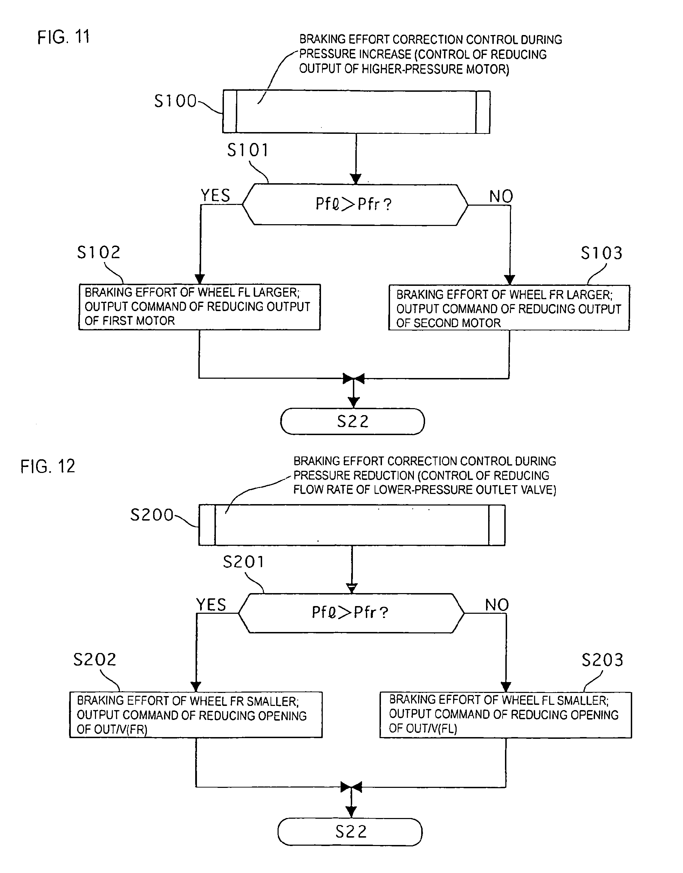

Fig. 11 is a flow chart showing a control process of implementing the braking effort correction control during pressure increase by reducing the output of the higher-pressure motor (Fig. 10, Step S100).

At Step S101, it is judged whether or not FL-wheel actual wheel cylinder pressure Pfl > FR-wheel actual wheel cylinder pressure Pfr. When the answer is YES, then the process proceeds to Step S102. When the answer is NO, then the process proceeds to Step S103.

At Step S102, on the assumption that the braking effort of wheel FL is larger, main ECU 300 outputs a command of reducing the output of first motor M1 connected to wheel FL, and then the process proceeds to Step S22 of Fig. 10.

At Step S103, on the assumption that the braking effort of wheel FR is larger, main ECU 300 outputs a command of reducing the output of second motor M2 connected to wheel FR, and then the process proceeds to Step S22 of Fig. 10.

### [Control Process of Braking Effort Correction Control during Pressure Reduction (Reducing Flow Rate of Lower-Pressure Outlet Valve)]

Fig. 12 is a flow chart showing a control process of implementing the braking effort correction control during pressure reduction by reducing the flow rate of the lower-pressure outlet valve (Fig. 10, Step S200).

At Step S201, it is judged whether or not FL-wheel actual wheel cylinder pressure Pfl > FR-wheel actual wheel cylinder pressure Pfr. When the answer is YES, then the process proceeds to Step S202. When the answer is NO, then the process proceeds to Step S203.

At Step S202, on the assumption that the braking effort of wheel FR is smaller, main ECU 300 outputs a command of reducing the opening of FR-wheel outlet valve OUT/V(FR), and then the process proceeds to Step S22 of Fig. 10.

At Step S203, on the assumption that the braking effort of wheel FL is smaller, main ECU 300 outputs a command of reducing the opening of FL-wheel outlet valve OUT/V(FL), and then the process proceeds to Step S22 of Fig. 10.

### [Process of Braking Effort Correction Control with Time]

### (Reducing Output of Higher-Pressure Motor during Pressure Increase, and Reducing Flow Rate of Lower-Pressure Outlet Valve during Pressure Reduction)

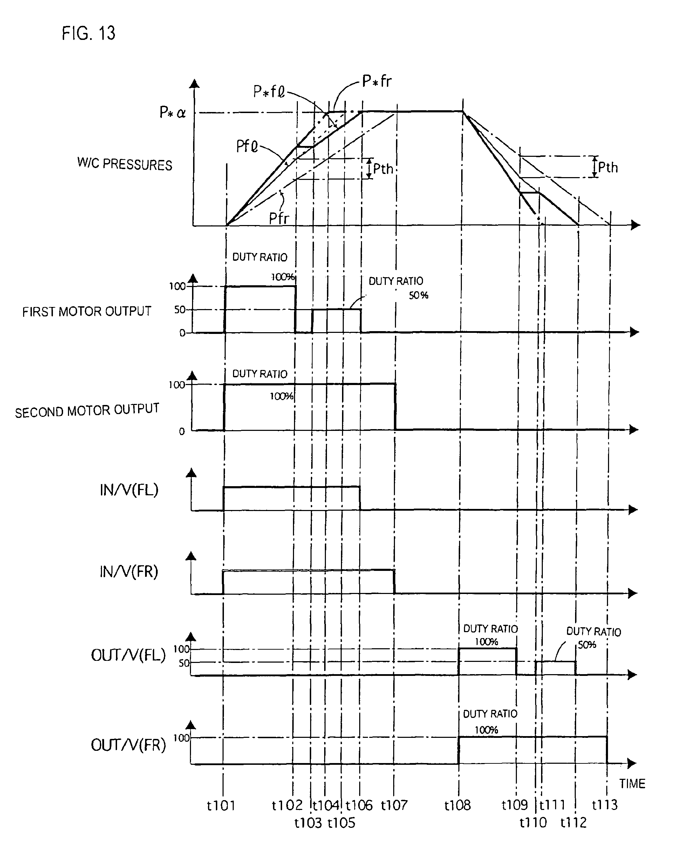

Fig. 13 is a time chart showing how the braking effort correction control proceeds with time. A narrow solid line represents FL-wheel actual wheel cylinder pressure Pfl, a narrow long-dashed short-dashed line represents FR-wheel actual wheel cylinder pressure Pfr, a thick solid line represents FL-wheel desired wheel cylinder pressure P*fl, and a thick long-dashed short-dashed line represents FR-wheel desired wheel cylinder pressure P*fr.

Fig. 13 shows a time chart for the case where the braking effort correction is performed for wheel FL. In the case where the correction is performed for wheel FR, the braking effort correction proceeds in the same manner except inversion between FL and FR. In the case where the correction is performed for wheels RL and RR, the control proceeds similarly.

### (Time t101)

At time t101, a command of pressure increase is issued so that first and second motors M1 and M2 start to operate at a duty ratio of 100% so as to cause a pressure increase at wheels FL and FR. The desired wheel cylinder pressures are equal to P*a (P*a=P*fl=P*fr). Since the flow rates of FL-wheel and FR-wheel inlet valves IN/V(FL, FR) are different from each other due to manufacturing variations based on single desired wheel cylinder pressure P*a, FL-wheel actual wheel cylinder pressure Pfl is higher than FR-wheel actual wheel cylinder pressure Pfr.

### (Time t102)

At time t102, the difference between the FL-wheel and FR-wheel actual wheel cylinder pressures Pfl-Pfr reaches predetermined threshold value Pth. In response to this, the braking effort correction control during pressure increase is started so that FL-wheel desired wheel cylinder pressure P*fl is reduced by reducing the output of first motor M1 (for example, at a duty ratio of 0%) which is connected to FL-wheel wheel cylinder W/C(FL) under higher pressure. Until the next control interval (time t103), first motor M1 is set at a duty ratio of 0%. The duty ratio of first motor M1 may be any value other than 0%, as long as the duty ratio of first motor M1 is lower than that of second motor M2.

### (Time t103)

At time t103, the duty ratio of first motor M1 is set to 50%. The duty ratio of second motor M2 is held at 100%.

### (Time t104)

At time t104, FR-wheel desired wheel cylinder pressure P*fr reaches desired value P*a. Since the output of first motor M1 is reduced, FL-wheel actual wheel cylinder pressure Pfl has not yet reached P*a.

### (Time t105)

In the case of no reduction of the duty ratio of first motor M1, FL-wheel actual wheel cylinder pressure Pfl reaches desired value P*a at time t105, as indicated by a broken line. In this case, the vehicle behavior is unstable, because the difference in braking effort between the left and right wheels is large.

### (Time t106)

At time t106, FL-wheel actual wheel cylinder pressure Pfl reaches desired value P*a later than in the case of no reduction of the duty ratio. The reduction of the duty ratio of first motor M1 serves to suppress the difference between FL-wheel and FR-wheel actual wheel cylinder pressures Pfl and Pfr within predetermined value Pth. Thus, the vehicle behavior is stabilized, because the difference in braking effort between the left and right wheels is smaller than in the case of no reduction of the duty ratio.

### (Time t107)

At time t107, FR-wheel actual wheel cylinder pressure Pfr reaches desired value P*a so that wheels FL and FR each generate an identical braking effort.

### (Time t108)

At time t108, a command of pressure reduction is issued so that FL-wheel and FR-wheel outlet valves OUT/V(FL, FR) are fully opened at a duty ratio of 100% so as to start to reduce FL-wheel and FR-wheel actual wheel cylinder pressure Pfl and Pfr. Since the flow rates of FL-wheel and FR-wheel inlet valves IN/V(FL, FR) are different from each other due to manufacturing variations based on the single controlled variable, FL-wheel actual wheel cylinder pressure Pfl is lower than FR-wheel actual wheel cylinder pressure Pfr during pressure reduction.

### (Time t109)

At time t109, the difference between the FL-wheel and FR-wheel actual wheel cylinder pressures ΔP=|Pf|-Pfr| reaches predetermined threshold value Pth. In response to this, the braking effort correction control under pressure reduction is started so that the decrease in FL-wheel desired wheel cylinder pressure P*fl is reduced by reducing the opening of FL-wheel outlet valve OUT/V(FL) (for example, at a duty ratio of 0%) which is normally closed. Until the next control interval (time t110), FL-wheel outlet valve OUT/V(FL) is fully closed at a duty ratio of 0%. The duty ratio of FL-wheel outlet valve OUT/V(FL) may be any value other than 0%, as long as the duty ratio of FL-wheel outlet valve OUT/V(FL) is lower than that of FR-wheel outlet valve OUT/V(FR).

### (Time t110)

(At time t110, the duty ratio of FL-wheel outlet valve OUT/V(FL) is set to 50%. The duty ratio of FR-wheel outlet valve OUT/V(FR) is held at 100% (fully opened) with P*fr=0.

### (Time t111)

At time t111, FR-wheel desired wheel cylinder pressure P*fr reaches 0. Since the opening of FL-wheel outlet valve OUT/V(FL) is reduced, FL-wheel actual wheel cylinder pressure Pfl has not yet reached 0.

### (Time t112)

At time t112, FL-wheel actual wheel cylinder pressure Pfl reaches 0. Since the opening of FL-wheel outlet valve OUT/V(FL) is reduced, the difference between FL-wheel and FR-wheel actual wheel cylinder pressures Pfl and Pfr is suppressed within predetermined value Pth.

### (Time t113)

At time t113, FR-wheel actual wheel cylinder pressure Pfr reaches 0 so that both of the braking effort of wheels FL and FR become 0.

### [Advantageous Effects of Embodiment 1]

(1) In Embodiment 1, a brake control device comprises: a braking-effort-sensing means (wheel cylinder pressure sensors WC/Sen(FL~RR)) for sensing braking efforts of vehicle wheels FL to RR; an actuator (hydraulic units HU1 and HU2) for applying braking efforts to the vehicle wheels FL to RR; and a control means (control unit 1) for controlling the braking efforts of the vehicle wheels FL to RR by controlling the actuator, wherein the control means: computes desired braking efforts P*fl to P*rr of the vehicle wheels; and when the desired braking efforts of left and right wheels FL and FR, or RR and RL are equal to each other, performs a braking effort correction control of allowing the braking effort of one of the left and right wheels to approach the braking effort of the other of the left and right wheels.

According to the foregoing, it is possible to stabilize the vehicle behavior while correcting variations in braking effort between left and right wheels which are caused by individual errors.

(2) The brake control device further comprises: master cylinder M/C; and wheel cylinders W/C(FL~RR) provided at vehicle wheels FL to RR for generating the braking efforts, wherein: wheel cylinder pressure sensors WC/Sen(FL~RR) sense actual fluid pressures Pfl to Prr; the actuator is hydraulic unit HU1, HU2 for controlling the fluid pressures of wheel cylinders W/C; hydraulic unit HU1, HU2 is provided separately from master cylinder M/C; and hydraulic unit HU1, HU2 includes hydraulic source P1, P2 for increasing the fluid pressures of wheel cylinders W/C.

According to the foregoing, a hydraulic brake-by-wire device can produce similar operation effects as in the case of Claim 1.

(3) Control unit 1 comprises main ECU 300 for computing desired wheel cylinder pressures P*fl to P*rr, and sub ECU 100, 200 for operating the hydraulic unit HU1, HU2 on the basis of the computed desired wheel cylinder pressures P*fl to P*rr, wherein hydraulic unit HU1, HU2 and sub ECU 100, 200 are formed integrally with each other.

According to the foregoing, it is possible to collect electric circuit configurations at one place, shorten harnesses, etc., and thus simplify the layout.

(4) Control unit 1 implements the braking effort correction control by reducing an amount of a working fluid supplied to the wheel cylinder of one of wheels FL and FR which is generating a larger braking effort during pressure increase. Control unit 1 performs a similar control for rear wheels RL and RR. Since no further increase in the braking efforts is possible under condition of maximum pressure, the fluid pressure of the wheel cylinder generating the larger braking effort is reduced to ensure that the difference in braking effort decreases.

(17) When front wheel desired wheel cylinder pressures P*fl and P*fr are indicative of a command of pressure increase, control unit 1 (control means) implements the braking effort correction control by operating one of hydraulic sources P1 and P2 connected to one of wheel cylinders W/C(FL, FR) of left and right front wheels FL and FR which generates a lower fluid pressure, so as to increase the amount of the working fluid supplied to the lower-pressure wheel cylinder. Control unit 1 performs a similar control for rear wheels RL and RR.

According to the foregoing, even when no fluid pressure control is possible by valves, for example, when inlet valves IN/V are fully opened, it is possible to carry out the braking effort correction control independently of the opening of the valves.

(9) Hydraulic unit HU1, HU2 (hydraulic actuator) includes outlet valves OUT/V(FL~RR) (pressure-reducing electromagnetic valves) provided between wheel cylinders W/C(FL~RR) and master cylinder M/C; and when front wheel desired wheel cylinder pressures P*fl and P*fr are indicative of a command of pressure reduction, control unit 1 implements the braking effort correction control by operating one of outlet valves OUT/V connected to one of front wheel cylinders (FL, FR) which has a lower actual fluid pressure, so as to increase an amount of a working fluid drained from the lower-pressure wheel cylinder. Control unit 1 performs a similar control for rear wheels RL and RR.

According to the foregoing, also during pressure reduction, it is possible to ensure that the difference in braking effort between left and right wheels decreases.

(13) Hydraulic unit HU1, HU2 (hydraulic actuator) comprises first and second hydraulic units HU1 and HU2. This provides a redundant system of hydraulic units. Even when one of first and second hydraulic units HU1 and HU2 is failed, it is possible to continue a brake-by-wire control by the other hydraulic unit, thereby obtaining a stable braking effort.

(14) Sub ECU 100, 200 (sub unit) comprises first and second sub ECUs 100 and 200. First sub ECU 100 controls first hydraulic unit HU1, while second sub ECU 200 controls second hydraulic unit HU2. This provides a redundant system of drive circuits for first and second hydraulic units HU1 and HU2. Even when one of first and second sub ECUs 100 and 200 is failed, it is possible to continue a brake-by-wire control by the other sub ECU.

(15) First sub ECU 100 is formed integrally with first hydraulic unit HU1, while second sub ECU 200 is formed integrally with second hydraulic unit HU2. Accordingly, each sub ECU 100, 200 is formed integrally with hydraulic unit HU1, HU2 as a unit of mechanism and electrical device. Thus, it is possible to collect electric circuit configurations at one place, shorten harnesses, etc., and thus simplify the layout.

(16) First and second hydraulic units HU1 and HU2 include first and second pumps P1 and P2, respectively; first pump P1 pressurizes left front wheel cylinder W/C(FL); and second pump P2 pressurizes right front wheel cylinder W/C(FR).

According to the foregoing, it is possible to provide sufficient braking efforts of wheels FL and FR by allowing first and second pumps P1 and P2 to provide pressure increases at front wheels FL and FR which require larger braking efforts than rear wheels RL and RR. It is also possible to correct the difference in actual fluid pressure between wheels FL and FR by varying the output of first and second pumps P1 and P2.

(19) First hydraulic unit HU1 controls actual wheel cylinder pressures Pfl and Prr of left front wheel FL and right rear wheel RR, while second hydraulic unit HU2 controls wheel cylinder pressures Pfr and Prl of right front wheel FR and left rear wheel RL.

The foregoing provides a redundant system of hydraulic units in the form of X-pipe arrangement. Accordingly, even when one of hydraulic units HU1 and HU2 is failed, it is possible to continue a brake-by-wire control by the other hydraulic unit, thereby obtaining a stable braking effort.

(21) Hydraulic source P1, P2 is a gear pump. This allows to provide a rapid pressure increase with no accumulator. Since such a gear pump is small, it is possible to form the device compact.

In the situations where the working fluid has a large coefficient of viscosity so that variations in flow rate between electromagnetic valves cause significant effects, for example, at low temperatures, the brake control device according to the present invention is effective for stabilizing the vehicle behavior.

### Embodiment 2

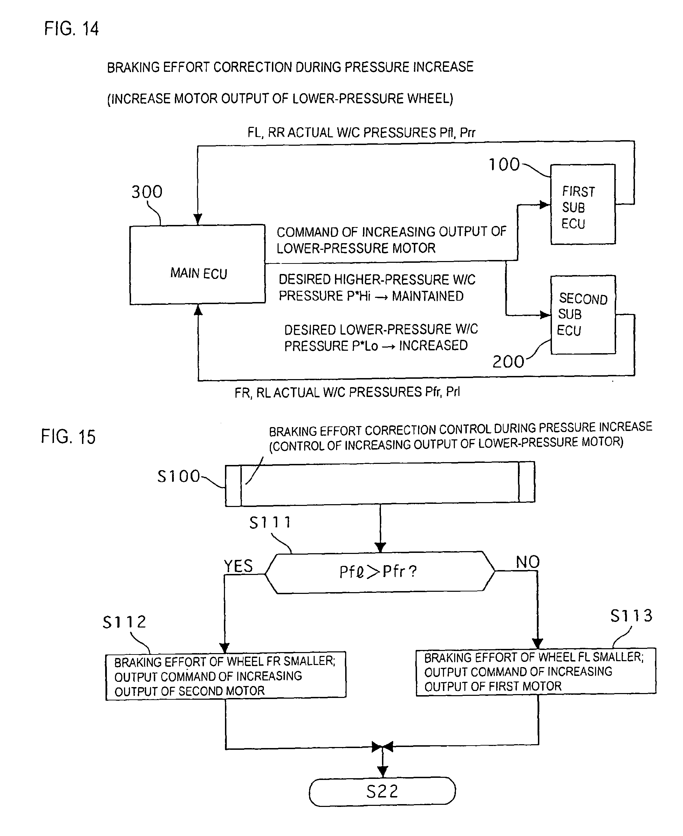

Embodiment 2 is described with reference to Figs. 14 to 16. Because the basic configuration is similar as in Embodiment 1, the following describes only different points. In Embodiment 1, during pressure increase, the difference in fluid pressure between left and right wheels is corrected by reducing the output of the motor connected to the higher-pressure wheel cylinder in the left and right wheels. In contrast, in Embodiment 2, the difference in fluid pressure is corrected by increasing the output of the motor connected to the lower-pressure wheel cylinder.

### [Relationship of Command among ECUs]

### (Control of Increasing Motor Output of Lower-Pressure Unit during Pressure Increase)

Fig. 14 is a block diagram showing a relationship of command among main ECU 300, and first and second sub ECUs 100 and 200 under the braking effort correction control (control of increasing the motor output of the lower-pressure unit).

When desired wheel cylinder pressures P*fl and P*fr of wheels FL and FR are equal to each other, and a difference in fluid pressure is present between front wheel cylinders W/C(FL, FR) during pressure increase, main ECU 300 outputs a command of output increase to the motor of the hydraulic unit generating a lower pressure. Thus, the desired fluid pressure of the lower-pressure wheel cylinder P*Lo is increased while the desired fluid pressure of the higher-pressure wheel cylinder P*Hi is maintained.

As a result, in wheels FL and FR, the lower-pressure wheel cylinder pressure is increased and the higher-pressure wheel cylinder pressure is maintained so that the difference in actual fluid pressure between wheels FL and FR decreases. Similar operation applies to wheels RL and RR.

### [Process of Braking Effort Correction Control during Pressure Increase (Increasing Output of Lower-Pressure Motor)]

Fig. 15 is a flow chart showing a control process of implementing the braking effort correction control during pressure increase by increasing the output of the lower-pressure motor (Fig. 10, Step S100).

At Step S121, it is judged whether or not FL-wheel actual wheel cylinder pressure Pfl > FR-wheel actual wheel cylinder pressure Pfr. When the answer is YES, then the process proceeds to Step S122. When the answer is NO, then the process proceeds to Step S123.

At Step S122, on the assumption that the braking effort of wheel FR is smaller, main ECU 300 outputs a command of increasing the output of second motor M2 connected to wheel FR, and then the process proceeds to Step S22 of Fig. 10.

At Step S123, on the assumption that the braking effort of wheel FL is smaller, main ECU 300 outputs a command of increasing the output of first motor M1 connected to wheel FL, and then the process proceeds to Step S22 of Fig. 10.

### [Process of Braking Effort Correction Control with Time in Embodiment 2]

### (Increasing Output of Lower-Pressure Motor during Pressure Increase, and Reducing Flow Rate of Lower-Pressure Outlet Valve during Pressure Reduction)

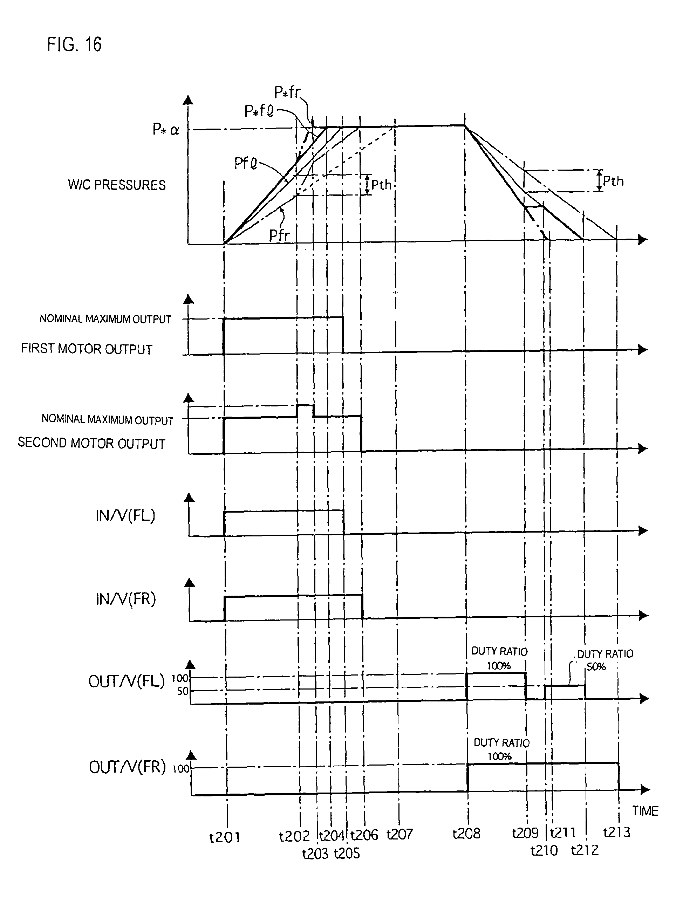

Fig. 16 is a time chart showing how the braking effort correction control proceeds with time. A narrow solid line represents FL-wheel actual wheel cylinder pressure Pfl, a narrow long-dashed short-dashed line represents FR-wheel actual wheel cylinder pressure Pfr, a thick solid line represents FL-wheel desired wheel cylinder pressure P*fl, and a thick long-dashed short-dashed line represents FR-wheel desired wheel cylinder pressure P*fr.

Fig. 16 shows a time chart for the case where the braking effort correction is performed for wheel FR. In the case where the correction is performed for wheel FR, the braking effort correction proceeds in the same manner except inversion between FL and FR. In the case where the correction is performed for wheels RL and RR, the control proceeds similarly. During pressure reduction (after time t28), the control proceeds similarly as in Embodiment 1 (Fig. 13).

### (Time t201)

At time t201, a command of pressure increase is issued so that first and second motors M1 and M2 start to operate at a nominal maximum output so as to cause a pressure increase at wheels FL and FR. The desired wheel cylinder pressures are equal to P*a (P*a=P*fl=P*fr). Since the flow rates of FL-wheel and FR-wheel inlet valves IN/V(FL, FR) are different from each other due to manufacturing variations based on single desired wheel cylinder pressure P*a, FL-wheel actual wheel cylinder pressure Pfl is higher than FR-wheel actual wheel cylinder pressure Pfr.

### (Time t202)

At Step S202, the difference between the FL-wheel and FR-wheel actual wheel cylinder pressures Pfl-Pfr reaches the predetermined threshold value Pth. In response to this, the braking effort correction control during pressure increase is started so that FR-wheel desired wheel cylinder pressure P*fr is increased by increasing the output of second motor M2 connected to FR-wheel wheel cylinder W/C(FR) under higher pressure. As a result, the gradient of FR-wheel actual wheel cylinder pressure Pfr increases.
Since the output of second motor M2 is equal to the nominal maximum output at time t201, the output is larger than the nominal maximum output at time t202. No failure occurs even under condition that the output is larger than the nominal maximum output, as long as it continues only for a short time. Accordingly, until the next control interval (time t203) after time t22, the second motor continues to provide an output above the nominal maximum output. The output of second motor M2 may be below the nominal maximum output, as long as the output of second motor M2 is larger than that of first motor M1.

### (Time t203)

At time t203, the output of second motor M2 is reduced to be equal to the nominal maximum output. As a result, the gradient of FR-wheel actual wheel cylinder pressure Pfr becomes equal to the previous value before time t22. Accordingly, FR-wheel desired wheel cylinder pressure P*fr, which has been above desired value P*a, returns to desired value P*a. On the other hand, the output of first motor M1 is maintained at the nominal maximum output.

### (Time t204)

At time t204, FL-wheel desired wheel cylinder pressure P*fl reaches desired value P*a.

### (Time t205)

At time t205, FL-wheel actual wheel cylinder pressure Pfl reaches desired value P*a.

### (Time t206)

At time t206, FR-wheel actual wheel cylinder pressure Pfr reaches desired value P*a so that wheels FL and FR generate equal braking efforts. The increase of the output of second motor M2 serves to suppress the difference between FL-wheel and FR-wheel actual wheel cylinder pressures Pfl and Pfr within the predetermined value Pth. Thus, the vehicle behavior is stabilized, because the difference in braking effort between the left and right wheels is smaller than in the case of no increase of the output of second motor M2.

### (Time t207)

In the case of no increase of the output of second motor M2, FR-wheel actual wheel cylinder pressure Pfr reaches desired value P*a at time t207, as indicated by a broken line. In this case, the vehicle behavior is unstable, because the difference in braking effort between the left and right wheels is large.

### (Time t208 to t213)

The braking effort correction control during pressure reduction is performed by outlet valves OUT/V similarly as at time t108 to t113 in Fig. 13.

### [Advantageous Effects of Embodiment 2]

(17) In Embodiment 2, in the case of a command of pressure increase, the braking effort correction control is implemented by increasing the output of one of hydraulic sources P1 and P2 connected to the wheel cylinder of one of wheels FL and FR which has a lower actual fluid pressure. A similar control is performed for wheels RL and RR.

According to the foregoing, it is possible to obtain similar advantageous effects as in Embodiment 1. Especially when the valves are fully opened, and it is desired not to reduce the braking effort, it is possible to bring the braking efforts of the left and right wheels into balance, independently of valve operation, without reducing the braking efforts.

In Embodiment 2, the period when the motor is operated above the nominal maximum output is limited within one control cycle (from t202 to t203). Alternatively, the motor may continue to provide an output above the nominal maximum output over a longer time, as long as no abnormality occurs. For example, the motor may continue to provide an output above the nominal maximum during a predetermined period of time.

### Embodiment 3

### [Control of Reducing Flow Rate of Higher-Pressure Inlet Valve during Pressure Increase]

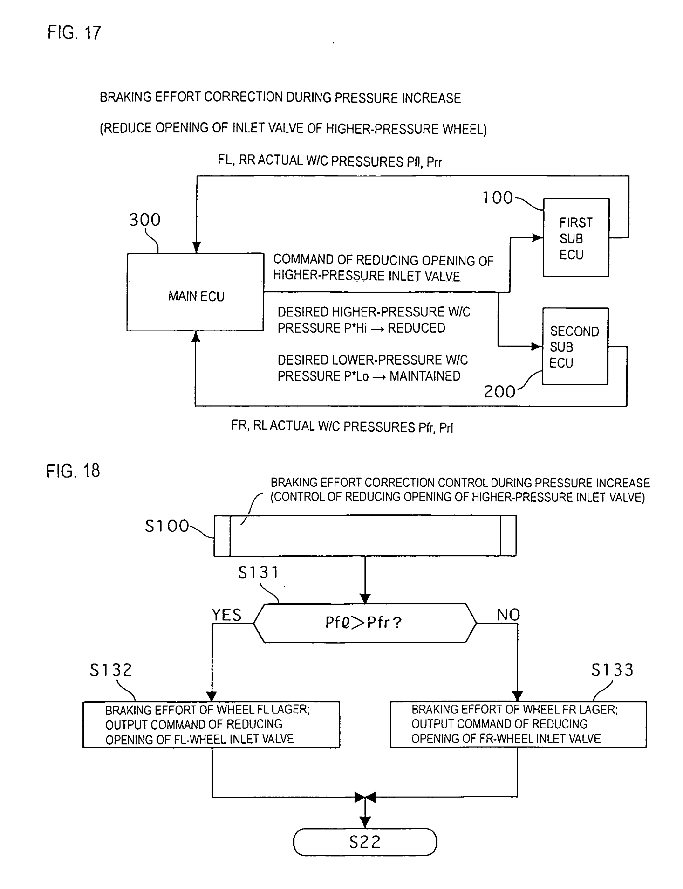

Embodiment 3 is described with reference to Figs. 17 to 19. The basic configuration is similar as in Embodiment 1. In Embodiment 1, the braking effort correction is implemented by reducing the output of the motor connected to the higher-pressure wheel cylinder in left and right wheels. In contrast, in Embodiment 3, the braking effort correction is implemented by reducing the opening of inlet valve IN/V connected to the higher-pressure wheel cylinder, so as to reduce the flow rate of inlet valve IN/V(FL).

For example, when FL-wheel actual wheel cylinder pressure Pfl is higher than FR-wheel actual wheel cylinder pressure Pfr on the basis of single desired wheel cylinder pressure P*a, the opening of FL-wheel inlet valve IN/V(FL), which is a normally open electromagnetic valve, is reduced below that of FR-wheel inlet valve IN/V(FR), so as to reduce the amount of the working fluid supplied to FL-wheel wheel cylinder W/C(FL).

Thus, FL-wheel desired wheel cylinder pressure P*fl is reduced below FR-wheel desired wheel cylinder pressure P*fr, to correct the difference in braking effort between wheels FL and FR. When FR-wheel actual wheel cylinder pressure Pfr is higher, the braking effort correction is performed similarly. Similar braking effort correction is performed for rear wheels RL and RR.

In Embodiment 3, each inlet valve IN/V is a linear valve. The flow rate is reduced by reducing the opening of inlet valve IN/V. Inlet valve IN/V may be an ON/OFF valve, and repeatedly open and close (See Fig. 20).

### [Relationship of Command between ECUs]

### (Control of Reducing Flow Rate of Higher-Pressure Inlet Valve during Pressure Increase)

Fig. 17 is a block diagram showing a relationship of command among main ECU 300, and first and second sub ECUs 100 and 200 under the braking effort correction control (control of reducing the flow rate of the higher-pressure inlet valve).

When desired wheel cylinder pressures P*fl and P*fr of wheels FL and FR are equal to each other, and a difference in actual fluid pressure is present between left and right front wheel cylinders W/C(FL, FR) during pressure increase, main ECU 300 outputs a command for reducing the opening of the inlet valve of the higher-pressure wheel. Thus, the desired fluid pressure of the higher-pressure wheel cylinder P*Hi is reduced while the desired fluid pressure of the lower-pressure wheel cylinder P*Lo is maintained.

As a result, in wheels FL and FR, the higher-pressure wheel cylinder pressure is reduced and the lower-pressure wheel cylinder pressure is maintained so that the difference in actual fluid pressure between wheels FL and FR decreases. Similar operation applies to RL, RR-wheels.

### [Process of Braking Effort Correction Control during Pressure Increase (Reducing Flow Rate of Higher-Pressure Inlet Valve)]

Fig. 18 is a flow chart showing a control process of implementing the braking effort correction control during pressure increase by reducing the flow rate of the higher-pressure inlet valve (Fig. 10, Step S100).

At Step S131, it is judged whether or not FL-wheel actual wheel cylinder pressure Pfl > FR-wheel actual wheel cylinder pressure Pfr. When the answer is YES, then the process proceeds to Step S132. When the answer is NO, then the process proceeds to Step S133.

At Step S132, on the assumption that the braking effort of wheel FL is larger, main ECU 300 outputs a command of reducing the opening of FL-wheel inlet valve IN/V(FL), and then the process proceeds to Step S22 of Fig. 10.

At Step S133, on the assumption that the braking effort of wheel FR is larger, main ECU 300 outputs a command of reducing the opening of FR-wheel inlet valve IN/V(FR), and then the process proceeds to Step S22 of Fig. 10.

### [Process of Braking Effort Correction Control with Time]

### (Reducing Flow Rate of Higher-Pressure Inlet Valve during Pressure Increase, and Reducing Flow Rate of Lower-Pressure Outlet Valve during Pressure Reduction)

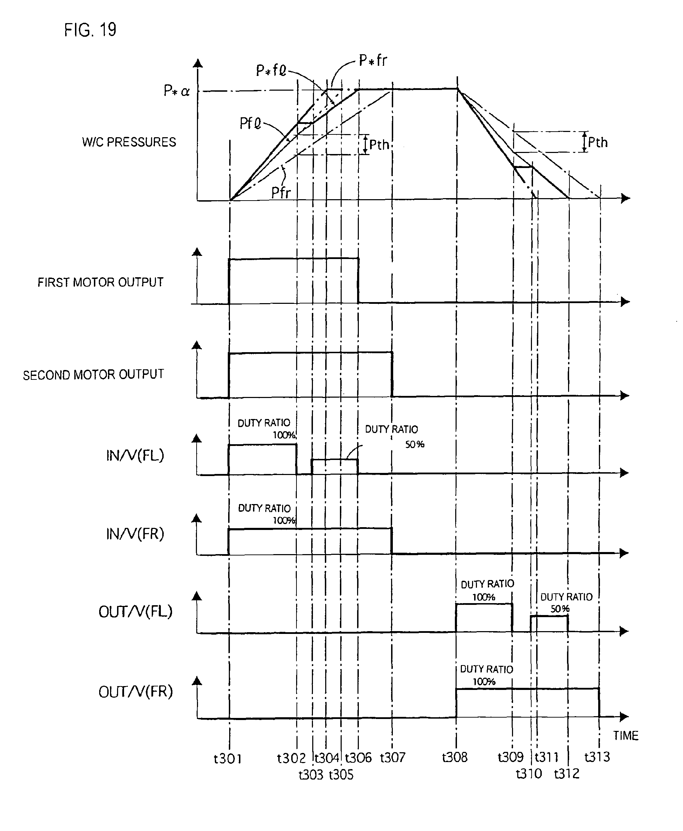

Fig. 19 is a time chart showing how the braking effort correction control proceeds with time. A narrow solid line represents FL-wheel actual wheel cylinder pressure Pfl, a narrow long-dashed short-dashed line represents FR-wheel actual wheel cylinder pressure Pfr, a thick solid line represents FL-wheel desired wheel cylinder pressure P*fl, and a thick long-dashed short-dashed line represents FR-wheel desired wheel cylinder pressure P*fr.

Fig. 19 shows a time chart for the case where the braking effort correction is performed for wheel FL. In the case where the correction is performed for wheel FR, the braking effort correction proceeds in the same manner except inversion between FL and FR. In the case where the correction is performed for wheels RL and RR, the control proceeds similarly.

### (Time t301)

At time t301, a command of pressure increase is issued so that first and second motors M1 and M2 start to operate at a duty ratio of 100%, and FL-wheel and FR-wheel actual wheel cylinder pressures Pfl and Pfr start to increase. The desired wheel cylinder pressures are equal to P*a (P*a=P*fl=P*fr). Since the flow rates of FL-wheel and FR-wheel inlet valves IN/V(FL, FR) are different from each other due to manufacturing variations based on single desired wheel cylinder pressure P*a, FL-wheel actual wheel cylinder pressure Pfl is higher than FR-wheel actual wheel cylinder pressure Pfr.

### (Time t302)

At time t302, the difference between the FL-wheel and FR-wheel actual wheel cylinder pressures Pfl-Pfr reaches the predetermined threshold value Pth. In response to this, the braking effort correction control during pressure increase is started so that FL-wheel desired wheel cylinder pressure P*fl is reduced by reducing the opening of FL-wheel inlet valve IN/V(FL) under higher pressure (for example, at a duty ratio of 0%). Until the next control interval (time t303), FL-wheel inlet valve IN/V(FL) is set at a duty ratio of 0%. The opening of FL-wheel inlet valve IN/V(FL) may be any value other than 0%, as long as the opening of FL-wheel inlet valve IN/V(FL) is smaller than that of FR-wheel inlet valve IN/V(FR).

### (Time t303)

At time t303, the duty ratio of FL-wheel inlet valve IN/V(FL) is set to 50%. The duty ratio of FR-wheel inlet valve IN/V(FR) is held at 100%.

### (Time t304)

At time t304, FR-wheel desired wheel cylinder pressure P*fr reaches desired value P*a. Since the duty ratio of FL-wheel inlet valve IN/V(FL) is reduced, FL-wheel actual wheel cylinder pressure Pfl has not yet reached P*a.

(Time t305) In the case of no reduction of the duty ratio of FL-wheel inlet valve IN/V(FL), FL-wheel actual wheel cylinder pressure Pfl reaches desired value P*a at time t305, as indicated by a broken line. In this case, the vehicle behavior is unstable, because the difference in braking effort between the left and right wheels is large.

### (Time t306)

At time t306, FL-wheel actual wheel cylinder pressure Pfl reaches desired value P*a later than in the case of no reduction of the duty ratio. The reduction of the duty ratio of FL-wheel inlet valve IN/V(FL) serves to suppress the difference between FL-wheel and FR-wheel actual wheel cylinder pressures Pfl and Pfr within the predetermined value Pth. Thus, the vehicle behavior is stabilized, because the difference in braking effort between the left and right wheels is smaller than in the case of no reduction of the duty ratio.

### (Time t307)

At time t307, FR-wheel actual wheel cylinder pressure Pfr reaches desired value P*a so that wheels FL and FR each generate an identical braking effort.

### (Time t308 to t313)

The braking effort correction control during pressure reduction is performed by outlet valves OUT/V similarly as at time t108 to t113 in Fig. 13.

### [Advantageous Effects of Embodiment 3]

(5) Hydraulic unit HU1, HU2 includes inlet valve IN/V(FR~RR) (pressure-increasing electromagnetic valve) provided between hydraulic source P1, P2 and wheel cylinder W/C(FL~RR); control unit 1 implements the braking effort correction control by operating the inlet valve IN/V connected to the wheel cylinder having a higher actual fluid pressure during pressure increase, so as to reduce the amount of the working fluid supplied to the wheel cylinder having the higher actual fluid pressure.

According to the foregoing, similar advantageous effects are obtained as in Embodiment 1. Especially even when no braking effort correction is possible by changing the motor outputs, for example, during full pressure increase, it is possible to perform the braking effort correction control without changing the motor outputs.

(7) Inlet valve IN/V is a linear valve; and control unit 1 implements the braking effort correction control by reducing the opening of inlet valve IN/V. Since inlet valve IN/V is a linear valve, it is possible to control precisely the flow rate of inlet valve IN/V.

(10) Outlet valve OUT/V is a linear valve; and control unit 1 implements the braking effort correction control by reducing the opening of outlet valve OUT/V. Since outlet valve OUT/V is a linear valve, it is possible to control precisely the flow rate of outlet valve OUT/V.

The following describes a modification of Embodiment 3.

### [Embodiment 3-1]

Fig. 20 is a hydraulic circuit diagram of first hydraulic unit HU1 according to Embodiment 3-1. Second hydraulic unit HU2 is similarly formed and omitted from the drawings. In Embodiment 3, inlet valves IN/V(FL~RR) and outlet valves OUT/V(FL~RR) are linear valves. In contrast, in Embodiment 3-1, inlet valves IN/V(FL~RR) and outlet valves OUT/V(FL~RR) are ON/OFF valves.

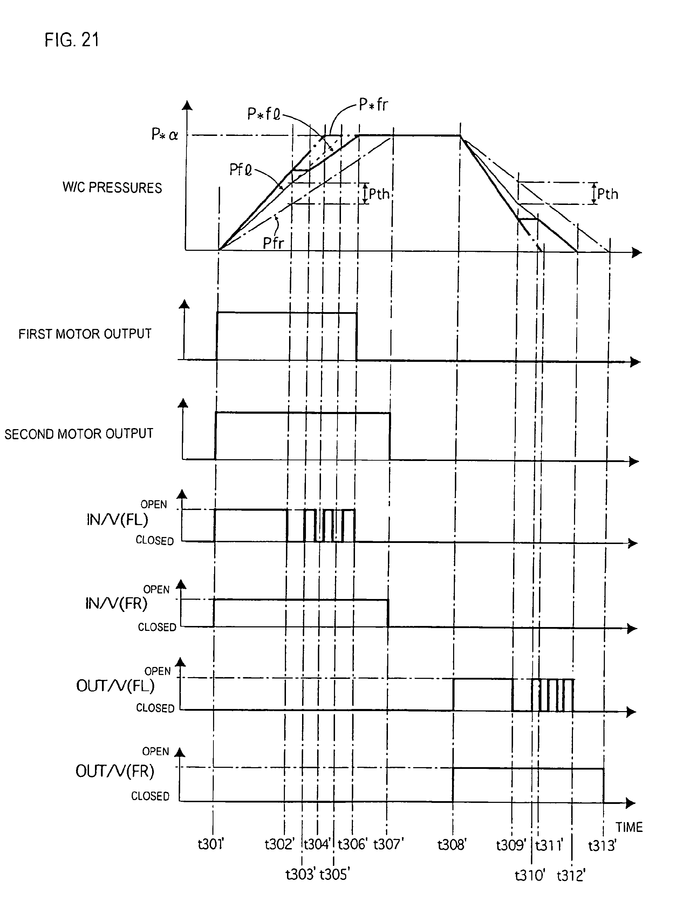

Fig. 21 shows how the braking effort correction control proceeds with time in Embodiment 3-1. Since each inlet valve IN/V(FL~RR) is a linear valve, the braking effort correction control during pressure increase is implemented by repeatedly opening and closing the inlet valve IN/V so as to reduce the flow rate of the valve. The braking effort correction during pressure reduction is implemented by repeatedly opening and closing the outlet valve OUT/V similarly.

### (Time t301' to t302')

This is similar as at time t301 to t302 in Fig. 19.

### (Time t303')

At time t303', the braking effort correction control during pressure increase is started, and FL-wheel desired wheel cylinder pressure P*fl is reduced by repeatedly opening and closing the FL-wheel inlet valve IN/V(FL) so as to reduce the amount of the supplied working fluid. The repetition of opening and closing continues from t303' to t306'.

### (Time t304' to t308')

This is similar as at time t304 to t308 in Fig. 19.

### (Time t309')

At time t309', the braking effort correction control during pressure reduction is started, and the reduction of FL-wheel desired wheel cylinder pressure P*fl is suppressed by repeatedly opening and closing the FL-wheel outlet valve OUT/V(FL) so as to reduce the amount of the working fluid drained from the wheel cylinder. The repetition of opening and closing continues from t309' to t312'.

### (Time t310' to t313')

This is similar as at time t310 to t313 in Fig. 19.

### [Advantageous Effects of Embodiment 3-1]

(7)(11) According to Embodiment 3-1, it is possible to produce similar advantageous effects as in Embodiment 3, by using low-cost ON/OFF valves as inlet valves IN/V(FL~RR) and outlet valves OUT/V(FL~RR). Also, in Embodiments 1 and 2, inlet valves IN/V(FL~RR) and outlet valves OUT/V(FL~RR) may be ON/OFF valves to produce similar advantageous effects.

### Embodiment 4

### [Reduction of Opening of Inlet Valve of Rear Wheel of Lower-Pressure System during Pressure Increase]

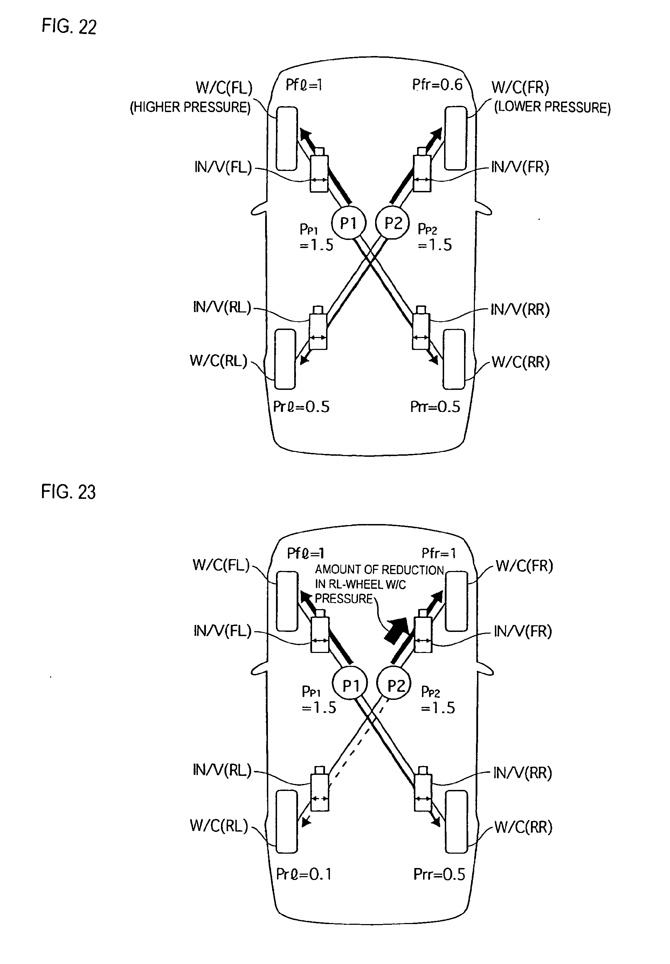

Embodiment 4 is described with reference to Figs. 22 to 26. The basic configuration is similar as in Embodiment 3. In Embodiment 3, the difference in fluid pressure between left and right wheels is corrected by reducing the flow rate of the inlet valve connected to the higher-pressure wheel cylinder.

In contrast, in Embodiment 4, in order to provide sufficient braking efforts at the front wheels, for example, when the braking effort of wheel FL is lower than that of wheel FR, the opening of RR-wheel inlet valve IN/V(RR) is reduced. Thus, FL-wheel actual wheel cylinder pressure Pfl is increased by reducing the working fluid supplied to RR-wheel wheel cylinder W/C(RR), and supplied the amount of reduction to wheel FL, in contrast to Embodiment 3.

### [Diagram for Showing Concept]

Figs. 22 and 23 are diagrams showing a concept of a braking effort correction control according to Embodiment 4. Fig. 22 shows a state before performing a control of shutting off a fluid pressure supply to a rear wheel of a lower-pressure system, while Fig. 23 shows a state after that.

Pump discharge pressures Pp1 and Pp2 of pump P1 for an FL-RR system and pump P2 for an FR-RL system are equal to each other. For the following description, Pp1=Pp2=1.5 is assumed. In general, the discharge pressure is distributed to the front and rear wheels with a ratio of 2:1. It is assumed for both of the FL-RR system and the FR-RL system that the front wheel is subject to a discharge pressure of 1, and the rear wheel is subject to a discharge pressure of 0.5.

The following is based on the assumption that FL-wheel and FR-wheel actual wheel cylinder pressures Pfl and Pfr have a relationship of Pfl>Pfr due to individual errors of FL-wheel and FR-wheel inlet valves IN/V(FL, FR).

The flow resistance of FL-wheel inlet valve IN/V(FL) is equal to a specific value so that FL-wheel actual wheel cylinder pressure Pfl = 1. On the other hand, the flow resistance of FR-wheel inlet valve IN/V(FR) is larger than the specific value so that FL-wheel actual wheel cylinder pressure Pfr = 0.6. This causes a difference in actual fluid pressure between wheels FL and FR. This results in a difference in braking effort between wheels FL and FR, thereby results in unstable vehicle behavior.

Wheels FR and RL are connected through pump P2 by piping in X-pipe arrangement. Accordingly, for example, when the opening of RL-wheel inlet valve IN/V(RL) is reduced while discharge pressure Pp2 of pump P2 is held constant, the working fluid supplied to RL-wheel wheel cylinder W/C(RL) is reduced.

The amount of reduction is applied to FR-wheel wheel cylinder W/C(FR), so as to increase FR-wheel actual wheel cylinder pressure Pfr. When RL-wheel inlet valve IN/V(RL) is fully closed, discharge pressure Pp2 of pump 2 is applied entirely to FR-wheel wheel cylinder W/C(FR), so as to increase further FR-wheel actual wheel cylinder pressure Pfr.

According to Embodiment 4, as shown in Fig. 23, the braking effort correction control is implemented by: when FR-wheel actual wheel cylinder pressure Pfr is lower than FL-wheel actual wheel cylinder pressure Pfl based on single desired wheel cylinder pressure P*a, reducing the working fluid supplied to RL-wheel wheel cylinder W/C(RL) by reducing the opening of inlet valve IN/V(RL) of wheel RL connected to wheel FR; and supplying the amount of reduction of RL-wheel actual wheel cylinder pressure Prl to FR-wheel wheel cylinder W/C(FR) for pressure increase.

In that case, the reduction in RL-wheel actual wheel cylinder pressure Prl causes the braking effort of wheel RL to decrease. Less braking effort is required for rear wheels than for front wheels. Thus, a sufficient braking effort of wheel FR is provided with a penalty to the braking effort of wheel RL. Also, when FL-wheel actual wheel cylinder pressure Pfl is low, a sufficient braking effort is provided to wheel FL by reducing the opening of RR-wheel inlet valve IN/V(RR) similarly.

In Fig. 23, the opening of RL-wheel inlet valve IN/V(RL) is reduced, for example, so as to regulate the RL-wheel actual fluid pressure as Prl =0.1. As a result, the working fluid supplied to RL-wheel wheel cylinder W/C(RL) decreases by 0.4, and the amount of reduction 0.4 is supplied to FR-wheel wheel cylinder W/C(FR). As a result, in Fig. 23, RL-wheel actual wheel cylinder pressure Prl=0.1, and FR-wheel actual wheel cylinder pressure Pfr=1.

The reduction of the opening of RL-wheel inlet valve IN/V(RL) is performed in response to a command from main ECU 300. Specifically, the opening of RL-wheel inlet valve IN/V(RL) is reduced so as to suppress the increase of RL-wheel desired wheel cylinder pressure P*rl, and to increase reflectively FR-wheel actual wheel cylinder pressure Pfr.

The braking effort correction control is implemented by reduction of the motor output in Embodiment 1, or by reduction of the opening of inlet valve IN/V on the higher-pressure wheel in Embodiment 3. Naturally, such braking effort correction for front wheels causes a decrease in the braking effort of the front wheels. In contrast, in Embodiment 4, it is possible to perform the braking effort correction for front wheels without reducing the braking efforts.

In Embodiment 2, the braking effort correction is implemented by increasing the output of the motor connected to the lower-pressure wheel cylinder. This causes no decrease in the braking effort of the front wheels. When the motor generates the nominal maximum output, the motor is required to generate a higher output than the nominal maximum output. It is not realistic to continue the higher output for a long time.

Accordingly, when the motor connected to the lower-pressure wheel cylinder is generating the nominal maximum output, for example, during full pressure increase, it is necessary to limit the period of time when the motor output is increased, to a specific short period, in order to implement the braking effort correction by increasing the output of the lower-pressure motor as in Embodiment 2. This adds constraints to the braking effort correction.

According to Embodiment 4, it is possible to implement the braking effort correction without the constraints as in Embodiment 2, by reducing the amount of the working fluid introduced into the wheel cylinder of the rear wheel, and supplying the amount of reduction to the front wheel.

The braking effort correction according to Embodiment 4 is based on the characteristic of pipe arrangement that the amount of reduction in the working fluid supplied to the wheel cylinder of the rear wheel is supplied to the wheel cylinder of the front wheel, and accordingly based on the assumption that one front wheel and one rear wheel are connected through a hydraulic source (pump) and a common pipe in a hydraulic circuit as in the case of X-pipe arrangement. This is applied only to front wheels but to rear wheels, because it is a concept to provide a sufficient braking effort at the front wheels with a penalty to the braking effort of the rear wheels.

### [Relationship of Command between ECUs]

### (Control of Reducing Opening of Inlet Valve of Rear Wheel of Lower-Pressure System during Pressure Increase)

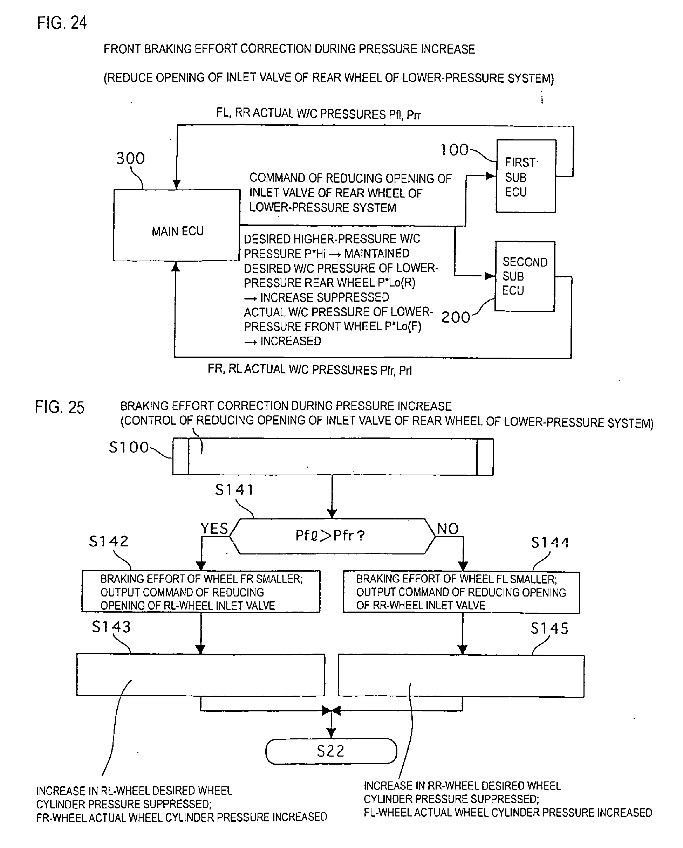

Fig. 24 is a block diagram showing a relationship of command among main ECU 300, and first and second sub ECUs 100 and 200 under the braking effort correction control (control of reducing the opening of the inlet valve of the rear wheel of the lower-pressure system during pressure increase).

When desired wheel cylinder pressures P*fl and P*fr of wheels FL and FR are equal to each other, and a difference in actual fluid pressure is present between left and right front wheels FL and FR during pressure increase, main ECU 300 outputs a command of reducing the opening of the inlet valve of the rear wheel of the lower-pressure system. Thus, the increase in desired fluid pressure P*Lo(R) of the wheel cylinder of the rear wheel on the lower-pressure is suppressed, while the desired fluid pressure of the higher-pressure wheel cylinder P*Hi is maintained. Then, the actual fluid pressure PLo(F) of the wheel cylinder of the lower-pressure front wheel is reflectively increased.

As a result, in wheels FL and FR, the wheel cylinder pressure of the higher-pressure front wheel is maintained and the wheel cylinder pressure of the lower-pressure front wheel is increased so that the difference in actual fluid pressure between wheels FL and FR decreases.

### [Process of Braking Effort Correction Control during Pressure Increase (Reducing Opening of Inlet Valve of Rear Wheel of Lower-Pressure system)]

Fig. 25 is a flow chart showing a control process of implementing the braking effort correction control during pressure increase by reducing the opening of the inlet valve of the rear wheel of the lower-pressure system (Fig. 10, Step S100).

At Step S141, it is judged whether or not FL-wheel actual wheel cylinder pressure Pfl > FR-wheel actual wheel cylinder pressure Pfr. When the answer is YES, then the process proceeds to Step S142. When the answer is NO, then the process proceeds to Step S144.

At Step S142, on the assumption that the braking effort of wheel FR is smaller, main ECU 300 outputs a command of reducing the opening of RL-wheel inlet valve IN/V(RL), and then the process proceeds to Step S143.

At Step S143, the increase of RL-wheel desired wheel cylinder pressure P*rl is suppressed, so as to increase reflectively FR-wheel actual wheel cylinder pressure Pfr, and then the process proceeds to Step S22 of Fig. 10.

At Step S144, on the assumption that the braking effort of wheel FL is smaller, main ECU 300 outputs a command of reducing the opening of RR-wheel inlet valve IN/V(RR), and then the process proceeds to Step S145.

At Step S145, the increase of RR-wheel desired wheel cylinder pressure P*rr is suppressed, so as to increase reflectively FL-wheel actual wheel cylinder pressure Pfl, and then the process proceeds to Step S22 of Fig. 10.

### [Process of Braking Effort Correction Control with Time]

### (Reducing Opening of Inlet Valve of Rear Wheel of Lower-Pressure System during Pressure Increase)

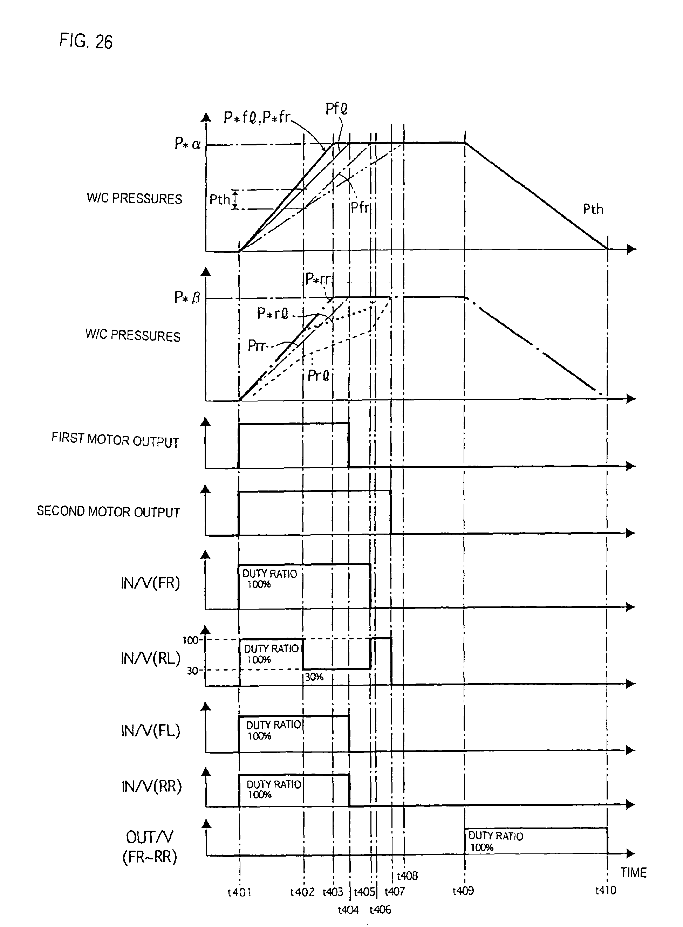

Fig. 26 is a time chart showing how the braking effort correction control proceeds with time in Embodiment 4. A narrow solid line represents FL-wheel actual wheel cylinder pressure Pfl, a narrow long-dashed short-dashed line represents FR-wheel actual wheel cylinder pressure Pfr, thick solid lines represent FL-wheel and FR-wheel desired wheel cylinder pressure P*fl and P*fr.

Moreover, a thick broken line represents RL-wheel desired wheel cylinder pressure P*rl, a thick long-dashed short-dashed line represents RR-wheel desired wheel cylinder pressure P*rr, a narrow broken line represents RL-wheel actual wheel cylinder pressure Prl, and a narrow long dashed double-short dashed line represents RR-wheel actual wheel cylinder pressure Prr. It is assumed that there is no individual error in inlet valves IN/V(RL, RR) for wheels RL and RR.

In Embodiment 4, it is assumed that there is no individual error in all of outlet valves OUT/V(FL~RR), and accordingly that no braking effort correction is performed during pressure reduction. Fig. 26 shows a time chart for the case where the braking effort correction is performed for wheel FR. In the case where the correction is performed for wheel FL, the braking effort correction proceeds in the same manner except inversion between FL and FR.

### (Time t401)

At time t401, a command of pressure increase is issued so that first and second motors M1 and M2 start to operate at an equal duty ratio, and actual wheel cylinder pressures Pfl to Prr start to increase. The desired wheel cylinder pressures for the front wheels are equal to P*a, while the desired wheel cylinder pressures for the rear wheels are equal to P*β. Although inlet valves IN/V(FL~RR) are fully opened (at a duty ratio of 100%), FL-wheel actual wheel cylinder pressure Pfl is higher than FR-wheel actual wheel cylinder pressure Pfr, because the flow rates of FL-wheel and FR-wheel inlet valves IN/V(FL, FR) are different from each other based on single desired wheel cylinder pressure P*a due to individual errors.

### (Time t402)

At time t402, the difference between the FL- and FR-actual wheel cylinder pressures Pfl-Pfr reaches the predetermined threshold value Pth. In response to this, the braking effort correction control during pressure increase is started so that the opening of RL-wheel inlet valve IN/V(RL) connected to the lower-pressure wheel FR through the pipe is reduced (for example, at a duty ratio of 30%). This causes a decrease in the amount of the working fluid supplied to wheel RL so as to suppress the increase in RL-wheel desired wheel cylinder pressure P*rl. The amount of reduction in the working fluid supplied to RL-wheel wheel cylinder W/C(RL) is supplied to wheel FR so as to increase FR-wheel actual wheel cylinder pressure Pfr. FL-wheel and RR-wheel actual fluid pressures Pfl and Prr continue to increase at respective maintained gradients. The opening of RL-wheel inlet valve IN/V(RL) may be any value other than 30%, as long as the opening of RL-wheel inlet valve IN/V(RL) is lower than that of RR-wheel inlet valve IN/V(RR).

### (Time t403)

At time t403, FL-wheel and FR-wheel desired wheel cylinder pressures P*fl and P*fr reach desired value P*a. Also, RR-wheel desired wheel cylinder pressure P*rr reaches the desired value. RL-wheel desired wheel cylinder pressure P*rl, whose increase has been suppressed, has not yet reached desired value P*β.

### (Time t404)

At time t404, FL-wheel and RR-wheel actual wheel cylinder pressures Pfl and Prr reach desired values P*a and P*β, respectively. Then, the pressure increase at wheels FL and RR is terminated, and inlet valves IN/V(FL, RR) are closed.

### (Time t405)

At time t405, FR-wheel actual wheel cylinder pressure Pfr reaches desired value P*a so that wheels FL and FR each generate an identical braking effort. Then, the pressure increase at wheel FR is terminated, and FR-wheel inlet valve IN/V(FR) is closed. Accordingly, it becomes unnecessary to suppress the working fluid supplied to RL-wheel wheel cylinder W/C(RL), and RL-wheel inlet valve IN/V(RL) is fully opened. As a result, the gradient of desired fluid pressure P*rl and actual fluid pressure Prl of RL-wheel wheel cylinder pressure are both increased. The reduction of the opening of RL-wheel inlet valve IN/V(RL) is effective for suppressing the difference between FL-wheel and FR-wheel actual wheel cylinder pressures Pfl and Pfr within the predetermined value Pth, thereby for reducing the difference in braking effort of the front wheels, and for stabilizing the vehicle behavior.

### (Time t406)

At time t406, RL-wheel desired wheel cylinder pressure P*rl reaches desired value P*β.

### (Time t407)

At time t407, RL-wheel actual wheel cylinder pressure Prl reaches desired value P*β. Then, the pressure increase at wheel RL is terminated, and RL-wheel inlet valve IN/V(RL) is closed.

### (Time t408)

In the case of no reduction of the opening of RL-wheel inlet valve IN/V(RL), FR-wheel actual wheel cylinder pressure Pfr reaches desired value P*a at time t408, as indicated by a narrow long dashed triple-short dashed line. In this case, the vehicle behavior is unstable, because the difference in braking effort between the left and right wheels is large.

### (Time t409 to t410)

A control of pressure reduction is performed from time t409 to t410. In Embodiment 4, since outlet valves OUT/V(FL~RR) are assumed to have no individual error, no braking effort correction is performed during pressure reduction.

### [Advantageous Effects of Embodiment 4]

(20) In Embodiment 4, the braking effort correction control is implemented by: when the actual wheel cylinder of wheel FL is lower than that of wheel FR during pressure increase, operating the RR-wheel inlet valve IN/V(RR) so as to reduce the amount of the working fluid supplied to RR-wheel wheel cylinder W/C(RR); and when the actual wheel cylinder of wheel FR is lower than that of wheel FL during pressure increase, operating the RL-wheel inlet valve IN/V(RL) so as to reduce the amount of the working fluid supplied to RL-wheel wheel cylinder W/C(RL).

According to the foregoing, it is possible to implement the braking effort correction for the front wheels with no decrease in braking effort of the front wheels by supplying to the front wheel cylinder the amount of reduction in the working fluid supplied to the rear wheel cylinder, so as to pressurize the front wheel cylinder.

Moreover, it is possible to implement the braking effort correction with no increase in the motor output and no decrease in the braking effort, even when it is difficult to increase further the motor output, for example, during full pressure increase. Therefore, it is possible to perform the braking effort correction for the front wheels with no constraint.

### Embodiment 5

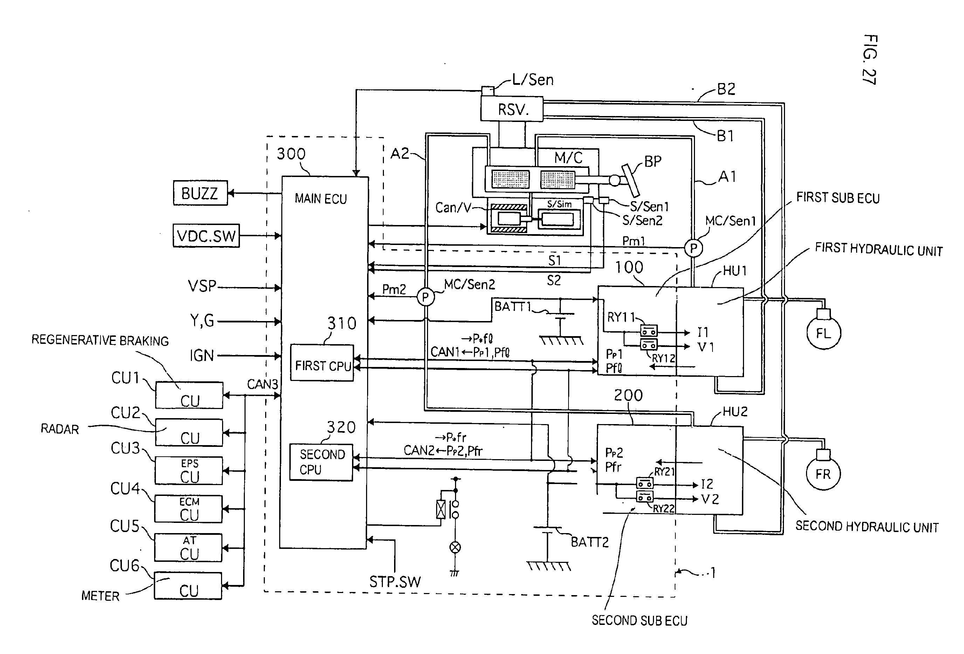

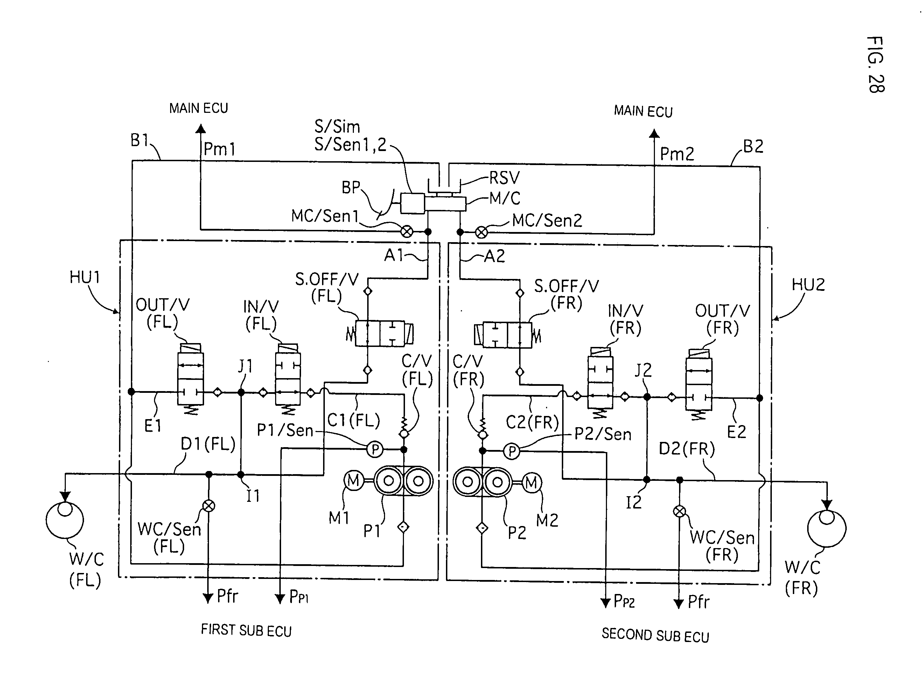

Embodiment 5 is described with reference to Figs. 27 and 28. Embodiments 1 to 4 concern a brake-by-wire system for all four wheels with hydraulic units HU1 and HU2. In contrast, Embodiment 5 concerns a brake-by-wire system with two hydraulic units only for wheels FL and FR.

### [System Configuration]

Fig. 27 is a system configuration diagram of a brake control device according to Embodiment 5. It differs from Embodiment 1 (Fig. 1) in that first and second hydraulic units HU1 and HU2 perform pressure increase and pressure reduction only at wheels FL and FR, respectively. The other points are the same as in Embodiment 1. The braking effort of the rear wheels may be implemented by a type that rotation of the rear wheels are stopped directly by the driving torque of an electric motor, or implemented by a type that master cylinder pressure Pm is constantly and directly to rear wheel cylinders W/C(RL, RR) to obtain a braking effort.

### [Hydraulic Circuit]

Fig. 28 is a hydraulic circuit diagram of first and second hydraulic units HU1 and HU2 according to Embodiment 5. First hydraulic unit HU1 pressurizes and decompresses FL-wheel wheel cylinder W/C(FL), while second hydraulic unit HU2 pressurizes and decompresses FR-wheel wheel cylinder W/C(FR).

Shut-off valves S.OFF/V(FL, FR) are provided respectively in fluid passages A1 and A2 connected to master cylinder M/C. Fluid passages A1 and A2 are connected to fluid passages C1(FL) and C2(FR) through nodes I1 and 12, respectively. Nodes I1 and 12 are respectively connected to FL-wheel and FR-wheel wheel cylinders W/C(FL, FR) through fluid passages D1(FL) and D2(FR).

Fluid passages C1(FL) and C2(FR) are respectively connected to the discharge side of pumps P1 and P2 so that check valves C/V(FL, FR) and FL-wheel inlet valves IN/V(FL, FR) are arranged from the discharge side of the pumps. Check valves C/V(FL, FR) allow unidirectional flow from the discharge side of pumps P1 and P2 to inlet valves IN/V(FL, FR), respectively.

Pumps P1 and P2 are connected on the suction side to reservoir RSV through fluid passages B1 and B2. Fluid passages B1 and B2 are connected to fluid passages C1(FL) and C2(FR) through fluid passages E1 and E2, and nodes J1 and J2, respectively. FL-wheel and FR-wheel outlet valves OUT/V(FL, FR), which are normally closed, are provided in fluid passages E1 and E2, respectively.

In Embodiment 5, all of inlet valves IN/V and outlet valves OUT/V are ON/OFF valves, and are repeatedly opened and closed for fluid pressure control (similarly as in Fig. 21). The low-cost ON/OFF valves result in cost reduction. These are not so limited, but may be linear valves.

### [Normal Braking under Brake-by-Wire Control]

### (During Pressure Increase)

During normal braking and pressure increase under brake-by-wire control, shut-off valves S.OFF/V(FL, FR) are closed, inlet valves IN/V(FL, RR) are opened, outlet valves OUT/V(FL, RR) are closed, and first and second motors M1 and M2 are operated. First and second motors M1 and M2 drive pumps P1 and P2 so as to supply the discharge pressures to fluid passages C1(FL) and C2(FR), respectively. Inlet valves IN/V(FL, RR) control the fluid pressures and introduce them into FL-wheel and FR-wheel wheel cylinders W/C(FL, FR) for pressure increase, respectively.

### (During Pressure Reduction)

During normal braking and pressure reduction, inlet valves IN/V(FL, RR) are closed, and outlet valves OUT/V(FL, RR) are opened to drain the wheel cylinder pressures to reservoir RSV for pressure reduction.

### (During Pressure Maintenance)

During normal braking and pressure maintenance, all of inlet valves IN/V(FL, RR) and outlet valves OUT/V(FL, RR) are closed, to maintain the wheel cylinder pressures.

### [Manual Braking]

During manual braking, shut-off valves S.OFF/V are opened, and inlet valves IN/V(FL, FR) are opened. Accordingly, master cylinder pressure Pm is applied to FL-wheel and FR-wheel wheel cylinders W/C(FL, FR). This ensures manual braking.

### [Braking Effort Correction Control According to Embodiment 5]

Since first and second hydraulic units HU1 and HU2 are each connected to a single wheel, FL-wheel and FR-wheel wheel cylinders W/C(FL, FR) are not connected to each other. Accordingly, FL-wheel and FR-wheel actual wheel cylinder pressures Pfl and Pfr are controlled independently of each other. When a difference in braking effort is present, a correction is made by increasing or reducing one of Pfl and Pfr.

Specifically, when a difference in braking effort occurs between wheels FL and FR, the output of first and second motors M1 and M2 may be changed as in Embodiments 1 and 2, or the braking effort correction control may be implemented by reducing the opening of FL-wheel and FR-wheel inlet valves IN/V(FL, FR) as in Embodiment 3. The braking effort correction during pressure reduction is performed similarly as in Embodiment 1.

In the case where the output of the higher-pressure motor for one of FL-wheel and FR-wheel wheel cylinders W/C(FL, FR) is reduced as in Embodiment 1, the relationship of command between ECUs, the flow chart, and the time chart are similar as in Figs. 1 and 7 to 13 in Embodiment 1. The case where the output of the lower-pressure motor is reduced is similar as in Figs. 14 to 16 in Embodiment 2. The case where the opening of the higher-pressure inlet valve is reduced is similar as in Figs. 17 to 19 in Embodiment 3. The braking effort correction under pressure reduction is similar as in Figs. 12 and 13 in Embodiment 1. Description for the foregoing cases is omitted.

### [Advantageous Effects According to Embodiment 5]

(18) In Embodiment 5, first hydraulic unit HU1 controls only the fluid pressure of FL-wheel wheel cylinder W/C(FL), while second hydraulic unit HU2 controls only the fluid pressure of FR-wheel wheel cylinder W/C(FR). According to this, it is possible to correct a difference in braking effort even in the case of a front brake-by-wire vehicle which generates a braking effort by allowing two hydraulic units to provide pump pressure increases to wheels FL and FR.

In contrast to the case where the wheel cylinder of all four wheels are pressurized by pump pressures, the brake-by-wire control only for the front can be simply constructed. Since the rear wheels do not require more braking effort than the front wheels, it is possible to achieve a brake device suitable for the vehicle, by selecting a construction of generating a rear wheel braking effort based on electric brake calipers and the master cylinder pressure.

The following describes a modification of Embodiment 5.

### [Embodiment 5-1]

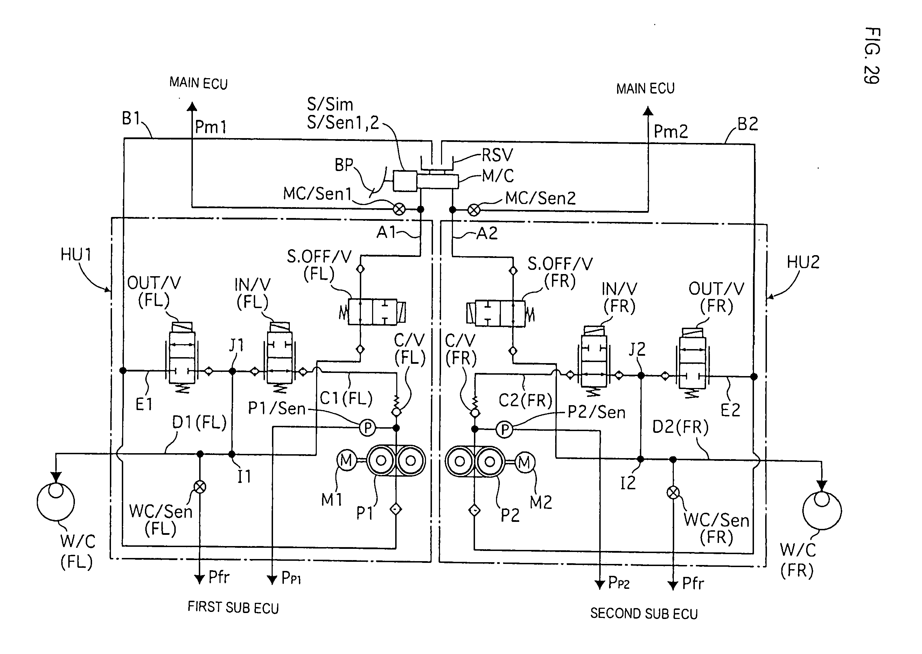

Fig. 29 shows an example where inlet valves IN/V and outlet valves OUT/V are linear valves based on the hydraulic circuit of Embodiment 5. The linear valves allow a precise control in the front brake-by-wire system.

### Embodiment 6

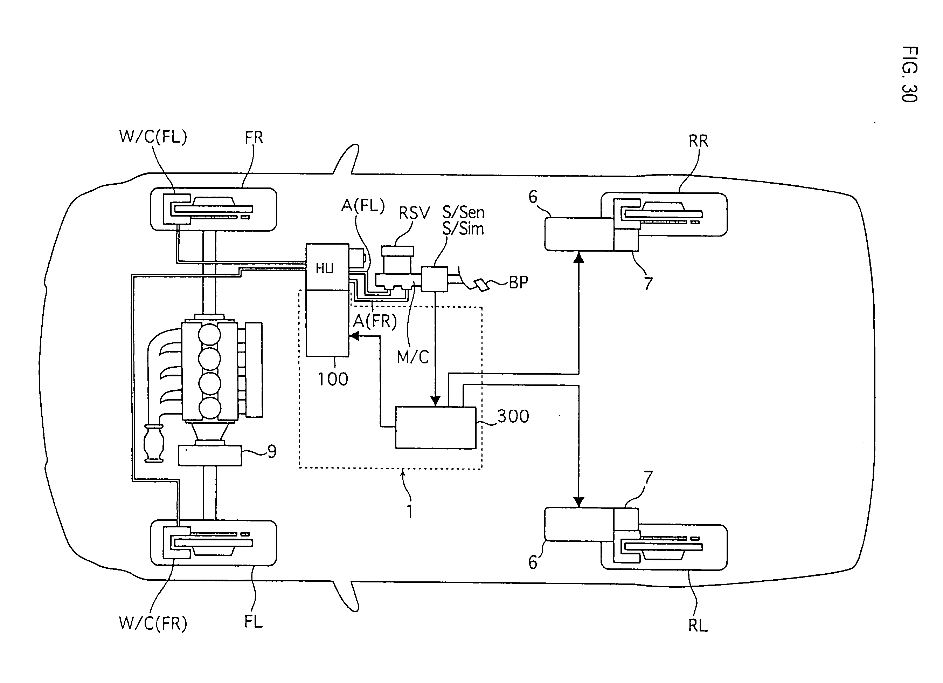

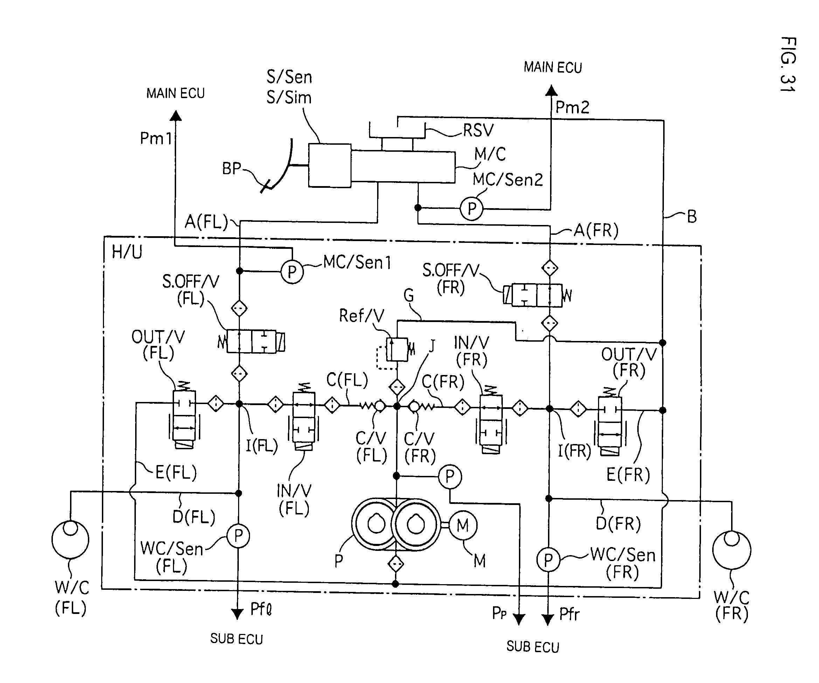

Embodiment 6 is described with reference to Figs. 30 and 31. In Embodiment 6, only front wheels use a pump discharge pressure to generate braking efforts; a single hydraulic unit HU increases or reduces FL-wheel and FR-wheel actual wheel cylinder pressures Pfl and Pfr. Hydraulic unit HU is operated by a single sub ECU 100. A single-system hydraulic system and a single-system electrical system are provided for the front wheels. On the other hand, a system of controlling braking electrically with no hydraulic pressure is provided for rear wheels.

Fig. 30 is a system configuration diagram according to Embodiment 6. A master cylinder M/C includes a stroke sensor S/Sen and a stroke simulator S/Sim. Depression of a brake pedal BP causes a fluid pressure to build up in master cylinder M/C, while a stroke signal S of brake pedal BP is outputted to a main ECU 300 in a control unit 1.

A master cylinder pressure Pm is supplied to hydraulic unit HU through fluid passages A(FL, FR), is controlled by allowing the sub unit 100 to operate hydraulic unit HU, and then is supplied to front-wheel wheel cylinders W/C(FL, FR) through fluid passages D(FL, FR), respectively.

Main ECU 300 computes FL-wheel and FR-wheel desired wheel cylinder pressure P*fl and P*fr, operates hydraulic unit HU through sub ECU 100, and controls the fluid pressure of wheel cylinders W/C(FL, FR). During braking, a regenerative braking device 9 brakes wheels FL and FR. A rear wheel brake actuator 6 controls the braking effort of an electric caliper 7 on the basis of a command signal from main ECU 300.

During normal braking based on brake-by-wire, hydraulic unit HU shuts off fluid communication between the master cylinder pressure and wheel cylinders W/C(FL, FR). On the other hand, a pump P supplies fluid pressures to wheel cylinders W/C(FL, FR), generating braking efforts. When the vehicle wheels are under a tendency of wheel lock due to rapid braking operation of a driver, pressure-increasing valves are operated, and the supply of fluid pressures from master cylinder M/C to FL-wheel and FR-wheel wheel cylinders W/C(FL, FR) are shut off, in order to release the wheel lock.

Pressure-reducing valves are further operated as appropriate, to reduce the fluid pressure of front-wheel wheel cylinders W/C(FL, FR), and thereby to provide braking efforts while avoiding wheel locks. When the function of brake-by-wire is failed, the master cylinder pressure is supplied to FL-wheel and FR-wheel wheel cylinders W/C(FL, FR), providing braking efforts.

### [Hydraulic Circuit]

Fig. 31 shows a hydraulic circuit diagram according to Embodiment 6. Pump P is connected on the discharge side to FL-wheel and FR-wheel wheel cylinders W/C(FL, FR) through fluid passages C1(FL, FR), and connected on the suction side to reservoir RSV through a fluid passage B. Fluid passages C1(FL, FR) are connected to fluid passage B through fluid passages E1(FL, FR), respectively.

A node I(FL) between fluid passages C(FL) and E(FL) is connected to master cylinder M/C through a fluid passage A(FL). A node I(FR) between fluid passages C(FR) and E(FR) is connected to master cylinder M/C through a fluid passage A(FR). Moreover, a node J between fluid passages C1(FL, FR) is connected to fluid passage B through a fluid passage G.

Shut-off valves S.OFF/V(FL, FR) are normally open electromagnetic valves provided in fluid passages A(FL, FR), respectively, for connecting or disconnecting between master cylinder M/C and nodes I(FL, FR), respectively.

FL-wheel and RR-wheel inlet valves IN/V(FL, FR) are normally open linear valves provided in fluid passages C(FL, FR), respectively, for controlling linearly the discharge pressure of pump P and supplying it to FL-wheel and FR-wheel wheel cylinders W/C(FL, RR), respectively. Check valves C/V(FL, FR) are provided in fluid passages C(FL, FR) between FL-wheel and RR-wheel inlet valves IN/V(FL, FR), for preventing inverse flow to pump P.

FL-wheel and FR-wheel outlet valves OUT/V(FL, FR) are normally closed linear valves provided in fluid passages E(FL, FR), respectively. A relief valve Ref/V is provided in fluid passage G which connects node J to fluid passage B.

First and second M/C pressure sensors MC/Sen1 and MC/Sen2 are provided in fluid passages A(FL, FR) between master cylinder M/C and shut-off valves S.OFF/V(FL, FR), respectively, for outputting M/C pressures Pm1 and Pm2 to main ECU 300.

FL-wheel and RR-wheel wheel cylinder pressure sensors WC/Sen(FL, FR) are provided in fluid passages C1(FL, FR) in hydraulic unit HU, and a pump discharge pressure sensor P/Sen is provided on the discharge side of pump P, for outputting the sensed values Pfl, Pfr and Pp to sub ECU 100.

### [Normal Braking under Brake-by-Wire Control]

### (During Pressure Increase)

During normal braking and pressure increase under brake-by-wire control, shut-off valves S.OFF/V(FL, FR) are closed, inlet valves IN/V(FL, FR) are opened, and outlet valves OUT/V(FL, FR) are closed, and motor M is operated. Inlet valves IN/V(FL, FR) performs a fluid pressure control for pressure increase.

### (During Pressure Reduction)

During normal braking and pressure reduction, inlet valves IN/V(FL, FR) are closed, and outlet valves OUT/V(FL, FR) are opened, so as to drain the wheel cylinder pressures to reservoir RSV, for pressure reduction.

### (During Pressure Maintenance)

During normal braking and pressure maintenance, all of inlet valves IN/V(FL, RR) and outlet valves OUT/V(FL, FR) are closed to maintain the wheel cylinder pressures.

### [Manual Braking]

During manual braking, shut-off valves S.OFF/V are opened, and inlet valves IN/V(FL, FR) are closed. Accordingly, master cylinder pressure Pm is applied to FL-wheel and FR-wheel wheel cylinders W/C(FL, FR). This allows manual braking.

### [Braking Effort Correction Control According to Embodiment 6]

In Embodiment 6, it is impossible to correct the difference in braking effort by the pump, because the single pump P provides pressure increases at wheels FL and FR. Accordingly, when a difference in braking effort is present between wheels FL and FR during pressure increase, the braking effort correction is implemented by changing the opening of inlet valves IN/V(FR, FR) as in Embodiment 3. The braking effort correction during pressure reduction is implemented by changing the opening of outlet valves OUT/V as in Embodiments 1 to 5. The flow chart and time chart are similar.

### [Advantageous Effects of Embodiment 6]

(12) Also in Embodiment 6, it is possible to obtain similar advantageous effects as in Embodiment 3 by changing the opening of inlet valves IN/V(FL, FR) during pressure increase, and by changing the opening of outlet valves OUT/V(FL, FR) during pressure reduction. In Embodiment 6, inlet valves IN/V(FL, FR) and outlet valves OUT/V(FL, FR) may be ON/OFF valves. It is possible to reduce power consumption by using check valves C/V(FL, FR) to prevent inverse flow, independently of inlet valves IN/V(FL, FR).

### (Other Embodiments)

Although the best mode for carrying out the invention has been described above by reference to certain embodiments, specific constructions according to the invention are not limited to the embodiments. The invention contains design modifications of the embodiments unless the modifications are out of the subject matter of the invention.

(8) In Embodiments 1 to 4, inlet valves IN/V(FL, RR) are normally closed. However, as shown in Fig. 32, inlet valves IN/V(FL, RR) may be normally open, and check valves C/V(FL, FR) may be provided in fluid passages C1(FL, RR) for preventing inverse flow to pump P1. Being normally open is effective for reducing power consumption.

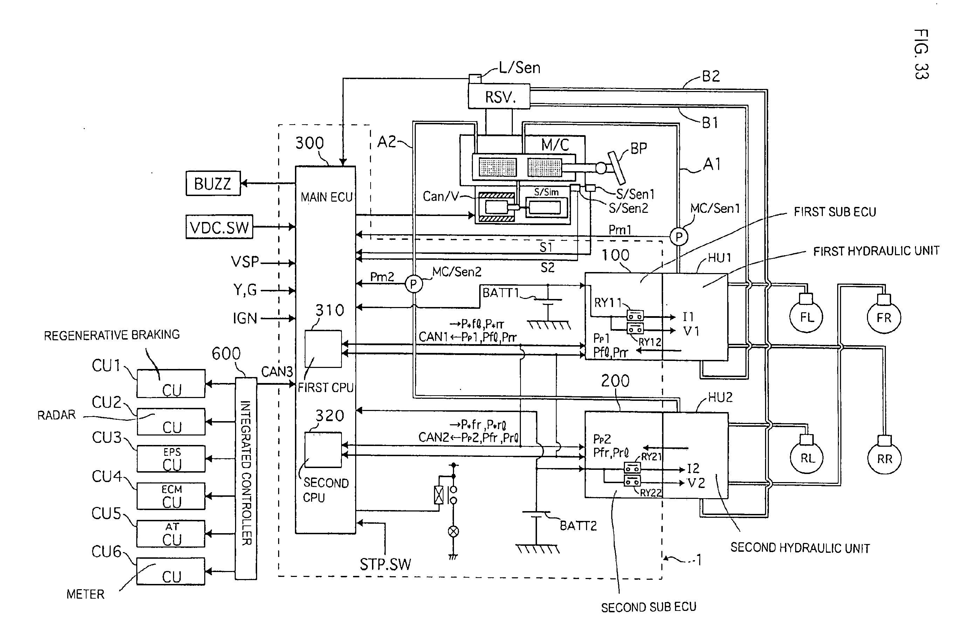

Moreover, as shown in Fig. 33, an integrated controller 600 may be provided for implementing various controls such as a regeneration cooperative braking system, and ITS. Even in such a case, since the brake control system is controlled independently of the other control systems, it is possible to adapt the integrated controller 600 with no special measure for the brake control system.

Still moreover, the following describes technical concepts other than the claims which are understood with reference to the embodiments described above, and also describes advantageous effects thereof.

(i) The brake control device as claimed in Claim 6, wherein the control means performs the braking effort correction control at least when the pressure-increasing electromagnetic valves are fully opened during pressure increase.

Manufacturing variations between electromagnetic valves cause significant effects, when the flow area is maximum or when they are fully opened. Accordingly, precise equalization of the braking efforts of left and right wheels when upstream electromagnetic valves are fully opened during pressure increase, serves to stabilize the vehicle behavior.

(ii) The brake control device as claimed in Claim 9, wherein the control means performs the braking effort correction control at least when the pressure-reducing electromagnetic valves are fully opened during pressure reduction.

Manufacturing variations between electromagnetic valves cause significant effects, when they are fully opened. Accordingly, as in the case of (i), precise equalization of the braking efforts of left and right wheels when pressure-reducing electromagnetic valves are fully opened, serves to stabilize the vehicle behavior.

## Claims

1. A brake control device comprising:
a braking-effort-sensing device for sensing braking efforts of vehicle wheels;
an actuator for applying braking efforts to the vehicle wheels; and
a control device for controlling the braking efforts of the vehicle wheels by controlling the actuator,
wherein the control device:
computes desired braking efforts of the vehicle wheels; and
when the desired braking efforts of left and right wheels of the vehicle wheels are equal to each other, performs a braking effort correction of allowing the braking effort of one of the left and right wheels to approach the braking effort of the other of the left and right wheels.

2. The brake control device as claimed in Claim 1, further comprising:
a master cylinder; and
wheel cylinders provided at the vehicle wheels for generating the braking efforts, wherein:
the braking-effort-sensing device senses actual fluid pressures of the wheel cylinders;
the actuator is a hydraulic actuator for controlling the fluid pressures of the wheel cylinders;
the hydraulic actuator is provided separately from the master cylinder; and
the hydraulic actuator includes a hydraulic source for increasing the fluid pressures of the wheel cylinders.

3. The brake control device as claimed in Claim 2, wherein the control device implements the braking effort correction by reducing an amount of a working fluid supplied to the wheel cylinder of a first one of the left and right wheels, the first one generating under pressure increase a larger braking effort.

4. The brake control device as claimed in Claim 3, wherein:
the hydraulic actuator includes pressure-increasing electromagnetic valves provided between the hydraulic source and the wheel cylinders; and
the control device implements the braking effort correction by operating under pressure increase one of the pressure-increasing electromagnetic valves, the one being connected to the wheel cylinder of a second one of the left and right wheels, the second one having a higher actual fluid pressure, so as to reduce the amount of the working fluid supplied to the wheel cylinder of the second one of the left and right wheels.

5. The brake control device as claimed in Claim 4, wherein:
the one of the pressure-increasing electromagnetic valves comprises a linear valve; and
the control device implements the braking effort correction by reducing an opening of the one of the pressure-increasing electromagnetic valves.

6. The brake control device as claimed in Claim 4, wherein:
the one of the pressure-increasing electromagnetic valves comprises an ON/OFF valve; and
the control device implements the braking effort correction by closing the one of the pressure-increasing electromagnetic valves.

7. The brake control device as claimed in Claim 2, wherein:
the hydraulic actuator includes pressure-reducing electromagnetic valves provided between the hydraulic source and the wheel cylinders; and
the control device implements the braking effort correction by operating under pressure reduction one of the pressure-reducing electromagnetic valves, the one being connected to the wheel cylinder of one of the left and right wheels, the one having a lower actual fluid pressure, so as to reduce an amount of a working fluid drained from the wheel cylinder of the one of the left and right wheels.

8. The brake control device as claimed in Claim 7, wherein:
the one of the pressure-reducing electromagnetic valves comprises a linear valve; and
the control device implements the braking effort correction by reducing an opening of the one of the pressure-reducing electromagnetic valves.

9. The brake control device as claimed in Claim 7, wherein:
the one of the pressure-reducing electromagnetic valves comprises an ON/OFF valve; and
the control device implements the braking effort correction by closing the one of the pressure-reducing electromagnetic valves.

10. The brake control device as claimed in Claim 2, wherein:
the hydraulic actuator comprises first and second hydraulic actuators;
the first and second hydraulic actuators include first and second hydraulic sources, respectively;
the first hydraulic actuator pressurizes the wheel cylinder of the left front wheel;
the second hydraulic actuator pressurizes the wheel cylinder of the right front wheel; and
when the desired wheel cylinder pressures are indicative of a command of pressure increase, the control device implements the braking effort correction by reducing an output of one of the hydraulic sources connected to the wheel cylinder of one of the left and right front wheels that generates a higher actual fluid pressure.

11. The brake control device as claimed in Claim 2, wherein:
the hydraulic actuator includes a hydraulic source; and
the hydraulic source pressurizes the wheel cylinders of left and right front wheels.

12. The brake control device as claimed in Claim 2, wherein:
the hydraulic actuator comprises first and second hydraulic actuators;
the first hydraulic actuator controls the fluid pressures of a left front wheel and a right rear wheel; and
the second hydraulic actuator controls the fluid pressures of a right front wheel and a left rear wheel.

13. The brake control device as claimed in Claim 12, wherein:
when the actual wheel cylinder pressure of the left front wheel is lower than that of the right front wheel under pressure increase, the control devices implements the braking effort correction by operating a pressure-increasing electromagnetic valve connected to the right rear wheel, so as to reduce an amount of a working fluid supplied to the right rear wheel; and
when the actual wheel cylinder pressure of the right front wheel is lower than that of the left front wheel under pressure increase, the control devices implements the braking effort correction by operating a pressure-increasing electromagnetic valve connected to the left rear wheel, so as to reduce an amount of a working fluid supplied to the left rear wheel.

14. The brake control device as claimed in Claim 2, wherein:
the control device comprises:
a main unit for computing desired wheel cylinder pressures; and
a sub unit for operating the hydraulic actuator in accordance with the computed desired wheel cylinder pressures; and
the hydraulic actuator and the sub unit are formed together as a unit.

15. The brake control device as claimed in Claim 14, wherein:
the sub unit comprises first and second sub units;
the first and second sub units control the first and second hydraulic actuators;
the first sub unit is formed integrally with the first hydraulic actuator; and
the second sub unit is formed integrally with the second hydraulic actuator.

16. The brake control device as claimed in Claim 2, wherein:
the hydraulic actuator comprises first and second hydraulic actuators;
the first hydraulic actuator controls only the fluid pressure of the wheel cylinder of the left front wheel; and
the second hydraulic actuator controls only the fluid pressure of the wheel cylinder of the right front wheel.

17. The brake control device as claimed in Claim 4, wherein:
the one of the pressure-increasing electromagnetic valves is a normally open valve; and
a unidirectional valve is provided between the one of the pressure-increasing electromagnetic valves and the hydraulic source for allowing a unidirectional flow to the one of the pressure-increasing electromagnetic valves.

18. A brake control device comprising:
a master cylinder adapted to operate in response to operation of a driver;
a braking effort generation means provided at the vehicle wheels for generating a braking effort;
a braking-effort-sensing means for sensing actual fluid pressures of the wheel cylinders;
a fluid pressure control means for controlling the fluid pressures of the wheel cylinders; and
a control means for controlling the braking efforts of the vehicle wheels by the fluid pressure control means, the control means being provided separately from the master cylinder, the control means including pressure-increasing electromagnetic valves for increasing the fluid pressures of the wheel cylinders, wherein:
the control means computes desired braking efforts of the vehicle wheels;
the control means includes a braking effort correction means for, when the desired braking efforts of left and right wheels of the vehicle wheels are equal to each other, allowing the braking effort of one of the left and right wheels to approach the braking effort of the other of the left and right wheels;
the braking effort correction means reduces an amount of a working fluid supplied to the wheel cylinder of a first one of the left and right wheels, the first one generating under pressure increase a larger braking effort; and
the braking effort correction means operates under pressure reduction a pressure-reducing electromagnetic valve connected to the wheel cylinder of one of the left and right wheels, the one having a lower actual fluid pressure, so as to reduce an amount of a working fluid drained from the wheel cylinder of the one of the left and right wheels.

19. The brake control device as claimed in Claim 18, wherein:
the fluid pressure control means includes pressure-increasing electromagnetic linear valves provided between the hydraulic sources and the wheel cylinders; and
the control means operates under pressure increase one of the pressure-increasing electromagnetic valves, the one being connected to the wheel cylinder of a second one of the left and right wheels, the second one having a higher actual fluid pressure, so as to reduce the amount of the working fluid supplied to the wheel cylinder of the second one of the left and right wheels.

20. The brake control device as claimed in Claim 19, wherein:
the fluid pressure control means includes pressure-reducing electromagnetic valves provided between the wheel cylinders and the master cylinder; and
the control means includes the braking effort correction means for operating under pressure reduction one of the pressure-reducing electromagnetic valves connected to the wheel cylinder of one of the left and right wheels that has a lower actual fluid pressure, so as to reduce the amount of the working fluid drained from the wheel cylinder of the one of the left and right wheels.
